(19) Europäisches Patentamt
European Patent Office
Office européen des brevets

(11) EP 4 694 532 A1

(12) **EUROPEAN PATENT APPLICATION**
published in accordance with Art. 153(4) EPC

(43) Date of publication:
**11.02.2026 Bulletin 2026/07**

(21) Application number: **24784004.4**

(22) Date of filing: **06.03.2024**

(51) International Patent Classification (IPC):
***H04W 74/08*** *(2024.01)*

(52) Cooperative Patent Classification (CPC):
**H04W 74/08**

(86) International application number:
**PCT/CN2024/080235**

(87) International publication number:
**WO 2024/207919 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023 CN 202310369315**
**15.05.2023 CN 202310545581**

(71) Applicant: **Datang Mobile Communications Equipment Co., Ltd.**
**Beijing 100085 (CN)**

(72) Inventors:
- **LUO, Yajuan**
  **Beijing 100085 (CN)**
- **GAO, Qiubin**
  **Beijing 100085 (CN)**
- **LI, Hui**
  **Beijing 100085 (CN)**
- **SU, Xin**
  **Beijing 100085 (CN)**

(74) Representative: **Studio Torta S.p.A.**
**Via Viotti, 9**
**10121 Torino (IT)**

(54) **PREAMBLE SENSING METHOD AND APPARATUS, AND TERMINAL AND NETWORK DEVICE**

(57) This disclosure provides a preamble sending method and apparatus, a terminal and a network device. The method includes: receiving, by a terminal, a physical downlink control channel (PDCCH) order sent by a first network device; determining, by the terminal, according to information included in the PDCCH order, a path loss reference signal and/or a beam for sending a preamble; and sending, by the terminal, the preamble according to the path loss reference signal and/or beam.

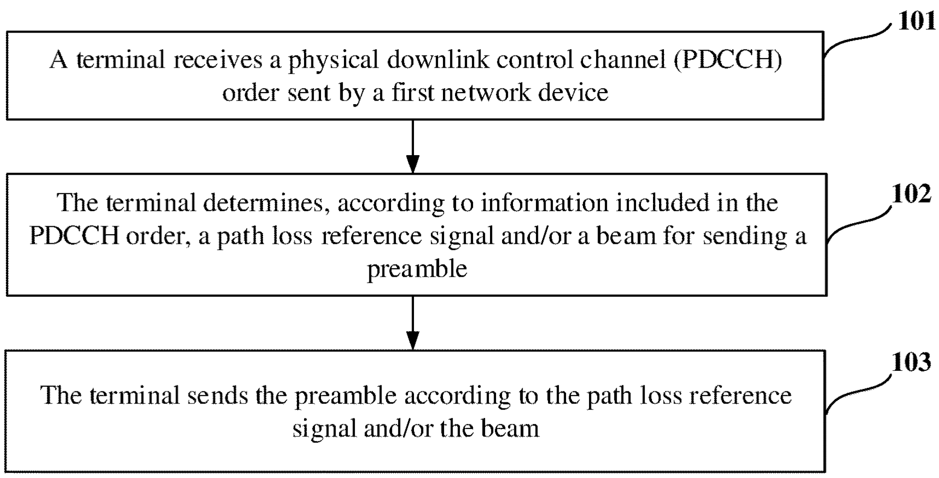


Fig. 1

EP 4 694 532 A1

## Description

### CROSS-REFERENCE TO RELATED APPLICATION

This application claims priority to the Chinese patent application No. 202310369315.2 filed with CNIPA on April 7, 2023, and titled "preamble sending method and apparatus, and terminal and network device", and claims priority to the Chinese patent application No. 202310545581.6 filed with CNIPA on May 15, 2023, and titled "preamble sending method and apparatus, and terminal and network device", disclosures of which are incorporated herein by reference in their entireties.

### TECHNICAL FIELD

The present disclosure relates to the field of communication technology, and in particular to a preamble sending method and apparatus, a terminal and a network device.

### BACKGROUND

A conventional contention-free random access (CFRA) process triggered by a physical downlink control channel (PDCCH) order involves: a base station sends a PDCCH order to instruct a terminal to initiate random access; upon receiving the order from the base station, the terminal initiates a random access process according to the PDCCH order. During the random access process, a synchronization signal and PBCH block (SSB)/channel state information reference signal (CSI-RS) quasi-co-located (QCLed) with the dedicated demodulation reference signal (DM-RS) of the PDCCH order is used as the path loss (PL) reference signal (RS) used in power estimation of preamble transmission by the terminal, and a receive beam of the SSB/CSI-RS QCLed with the PDCCH order DM-RS is used as the beam for sending the preamble.

For scenarios utilizing multiple transmission and receiving point (multi-TRP), if the preamble is sent using the above-mentioned conventional technology, other TRPs except the base station will not be able to receive the preamble sent by the terminal.

### SUMMARY

The present disclosure aims to provide a preamble sending method and apparatus, a terminal and a network device, to solve the problem that the conventional random access method causes a TRP in the multi-TRP scenario to be unable to receive the preamble sent by a terminal.

An embodiment of the present disclosure provides a preamble sending method, including:

receiving, by a terminal, a physical downlink control channel (PDCCH) order sent by a first network device;
determining, by the terminal, according to information included in the PDCCH order, a path loss reference signal and/or a beam for sending a preamble; and
sending, by the terminal, the preamble according to the path loss reference signal and/or the beam.

In some embodiments, the path loss reference signal is not quasi-co-located with a reference signal used to receive the PDCCH order; and/or the beam is different from a beam used to receive the PDCCH order.

In some embodiments, the determining, according to the information included in the PDCCH order, the path loss reference signal for sending the preamble includes one of the following:

determining that a synchronization signal and PBCH block (SSB) included in the PDCCH order is used as the path loss reference signal for sending the preamble, the SSB being associated with the second network device; or
determining, according to a first codepoint included in the PDCCH order, the path loss reference signal for sending the preamble; or
determining, according to a first indicator field included in the PDCCH order, the path loss reference signal for sending the preamble.

In some embodiments, determining, according to the first codepoint included in the PDCCH order, the path loss reference signal for sending the preamble includes:
determining that a type-D source reference signal included in a transmission configuration indicator (TCI) state corresponding to the first codepoint is used as the path loss reference signal for sending the preamble.

In some embodiments, the first indicator field is used for indicating a control resource set (CORESET) index of an active TCI state pool, and determining, according to the first indicator field included in the PDCCH order, a path loss reference signal for sending a preamble includes:
determining that a type-D source reference signal included in a first TCI state is used as the path loss reference signal for sending the preamble, wherein the first TCI state is a preset TCI state in the active TCI state pool corresponding to the control resource set index.

In some embodiments, determining, according to the information included in the PDCCH order, the beam for sending the preamble includes one of the following:

determining that a beam for receiving an SSB included in the PDCCH order is used as the beam for sending the preamble, wherein the SSB is associated with a second network device; or
determining, according to a second codepoint included in the PDCCH order, the beam for sending the preamble; or
determining, according to a second indicator field included in the PDCCH order, the beam for sending the preamble.

In some embodiments, determining, according to the second codepoint included in the PDCCH order, the beam for sending the preamble includes:
determining that a beam for receiving a type-D source reference signal included in the TCI state corresponding to the second codepoint is used as the beam for sending the preamble.

In some embodiments, the second indicator field is used for indicating a control resource set (CORESET) index of an active TCI state pool, and determining, according to the second indicator field included in the PDCCH order, a beam for sending a preamble includes:
determining that a beam for receiving a type-D source reference signal included in a second TCI state is used as the beam for sending the preamble, wherein the second TCI state is a preset TCI state in the active TCI state pool corresponding to the control resource set index.

In some embodiments, the association between the SSB and the second network device includes at least one of the following:

a network device corresponding to an SSB group to which the SSB belongs is the second network device;
the SSB is an SSB in a type-D source reference signal included in a TCI state corresponding to the second network device among TCI states indicated by the first network device; or
the SSB is an SSB used by a path loss reference signal in an uplink transmission corresponding to the second network device.

In some embodiments, the method further includes:
receiving SSB group information sent by the first network device, wherein the SSB group information is used for indicating a network device corresponding to each SSB group, and each SSB group includes at least one SSB.

In some embodiments, sending, by the terminal, the preamble according to the path loss reference signal includes:

determining, according to the path loss reference signal, a path loss of sending the preamble;
calculating, according to the path loss, a transmission power for sending the preamble; and
sending the preamble by using the transmission power.

In some embodiments, the method further includes:

receiving, using a beam that is used to receive the PDCCH order, a PDCCH scheduling a random access response (RAR) and the RAR that are sent by the first network device;
or,
receiving, using a beam in a control resource set associated with a common search space (CSS) corresponding to a second network device, a PDCCH scheduling an RAR and the RAR that are sent by the second network device.

**In** some embodiments, the RAR includes timing advance group (Timing Advance Group, TAG) identification information, where the TAG identification information is used for indicating a TAG corresponding to a timing advance (Timing Advance, TA) included in the RAR.

**In** some embodiments, the information included in the PDCCH order includes: first indication information, where the first indication information is used for indicating a candidate cell identifier.

An embodiment of the present disclosure provides a preamble sending method, including:

determining, by a first network device, information included in a PDCCH order; and

sending, by the first network device, the PDCCH order to a terminal, and indicating, through the information included in the PDCCH order, a path loss reference signal and/or a beam for the terminal to send a preamble.

**In** some embodiments, the path loss reference signal is not quasi-co-located with a reference signal used by the terminal to receive the PDCCH order; and/or the beam is different from a beam used by the terminal to receive the PDCCH order.

In some embodiments, indicating, through the information included in the PDCCH order, the path loss reference signal for the terminal to send the preamble includes one of the following:

indicating that a synchronization signal and PBCH block (SSB) included in the PDCCH order is used as the path loss reference signal for the terminal to send the preamble, the SSB being associated with the second network device; or
setting a first codepoint in the PDCCH order, and indicating the path loss reference signal for the terminal to send the preamble through the first codepoint; or
setting a first indicator field in the PDCCH order, and indicating the path loss reference signal for the terminal to send the preamble through the first indicator field.

In some embodiments, indicating the path loss reference signal for the terminal to send the preamble through the first codepoint includes:
indicating a TCI state through the first codepoint, wherein a type-D source reference signal included in the TCI state corresponding to the first codepoint is used as the path loss reference signal for sending the preamble.

In some embodiments, indicating the path loss reference signal for the terminal to send the preamble through the first indicator field includes:
indicating a control resource set index of an active TCI state pool through the first indicator field, wherein a type-D source reference signal included in a first TCI state corresponding to the control resource set index is used as the path loss reference signal for the terminal to send the preamble, and the first TCI state is a preset TCI state in the active TCI state pool corresponding to the control resource set index.

In some embodiments, indicating, through the information included in the PDCCH order, the beam for the terminal to send the preamble includes one of the following:

indicating that a beam for receiving an SSB included in the PDCCH order is used as the beam for the terminal to send the preamble, wherein the SSB is associated with a second network device; or
setting a second codepoint in the PDCCH order, and indicating the beam for the terminal to send the preamble through the second codepoint; or
setting a second indicator field in the PDCCH order, and indicating the beam for the terminal to send the preamble through the second indicator field.

In some embodiments, indicating the beam for the terminal to send the preamble through the second codepoint includes:
indicating a TCI state through the second codepoint, wherein a beam for receiving a type-D source reference signal included in the TCI state corresponding to the second codepoint is used as the beam for the terminal to send the preamble.

In some embodiments, indicating the beam for the terminal to send the preamble through the second indicator field includes:
indicating a control resource set index of an active TCI state pool through the second indicator field, wherein a beam for receiving a type-D source reference signal included in a second TCI state is used as the beam for the terminal to send the preamble, and the second TCI state is a preset TCI state in the active TCI state pool corresponding to the control resource set index.

**In** some embodiments, the association between the SSB and the second network device includes at least one of the following:

a network device corresponding to an SSB group to which the SSB belongs is the second network device;
the SSB is an SSB in a type-D source reference signal included in a TCI state corresponding to the second network device among TCI states indicated by the first network device; or
the SSB is an SSB used by a path loss reference signal in an uplink transmission corresponding to the second network device.

**In** some embodiments, the method further includes:

grouping the SSBs according to the network device corresponding to each SSB to obtain SSB group information; and

sending the SSB group information to the terminal;
wherein each SSB group includes at least one SSB.

In some embodiments, the method further includes:
sending, to the terminal, a PDCCH for scheduling an RAR and the RAR.

In some embodiments, the RAR includes TAG identification information, and the TAG identification information is used for indicating the TAG corresponding to the TA included in the RAR.

In some embodiments, the information included in the PDCCH order includes: first indication information, where the first indication information is used for indicating a candidate cell identifier.

An embodiment of the present disclosure provides a terminal, including: a memory, a transceiver, and a processor; wherein the memory is configured to store a computer program; the transceiver is configured to receive and send data under the control of the processor; and the processor is configured to read the computer program in the memory and perform the following steps:

receiving a physical downlink control channel (PDCCH) order sent by a first network device;
determining, according to information included in the PDCCH order, a path loss reference signal and/or a beam for sending a preamble; and
sending the preamble according to the path loss reference signal and/or the beam.

In some embodiments, the path loss reference signal is not quasi-co-located with a reference signal used to receive the PDCCH order; and/or the beam is different from a beam used to receive the PDCCH order.

In some embodiments, the processor is configured to read the computer program in the memory and perform one of the following steps:

determining that a synchronization signal and PBCH block (SSB) included in the PDCCH order is used as the path loss reference signal for sending the preamble, the SSB being associated with the second network device; or
determining, according to a first codepoint included in the PDCCH order, the path loss reference signal for sending the preamble; or
determining, according to a first indicator field included in the PDCCH order, the path loss reference signal for sending the preamble.

In some embodiments, the processor is configured to read the computer program in the memory and perform the following step:
determining that a type-D source reference signal included in a TCI state corresponding to the first codepoint is used as the path loss reference signal for sending the preamble.

In some embodiments, the first indicator field is used for indicating a control resource set (CORESET) index of an active TCI state pool, and the processor is configured to read a computer program in the memory and perform the following step:
determining that a type-D source reference signal included in a first TCI state is used as the path loss reference signal for sending the preamble, wherein the first TCI state is a preset TCI state in the active TCI state pool corresponding to the control resource set index.

In some embodiments, the processor is configured to read the computer program in the memory and perform one of the following steps:

determining that a beam for receiving an SSB included in the PDCCH order is used as the beam for sending the preamble, wherein the SSB is associated with a second network device; or
determining, according to a second codepoint included in the PDCCH order, the beam for sending the preamble; or
determining, according to a second indicator field included in the PDCCH order, the beam for sending the preamble.

In some embodiments, the processor is configured to read the computer program in the memory and perform the following step:
determining that a beam for receiving a type-D source reference signal included in the TCI state corresponding to the second codepoint is used as the beam for sending the preamble.

In some embodiments, the second indicator field is used for indicating a control resource set (CORESET) index of an active TCI state pool, and the processor is configured to read the computer program in the memory and perform the following step:
determining that a beam for receiving a type-D source reference signal included in a second TCI state is used as the beam for sending the preamble, wherein the second TCI state is a preset TCI state in the active TCI state pool corresponding to the control resource set index.

In some embodiments, the association between the SSB and the second network device includes at least one of the following:

a network device corresponding to an SSB group to which the SSB belongs is the second network device;
the SSB is an SSB in a type-D source reference signal included in a TCI state corresponding to the second network device among TCI states indicated by the first network device; or
the SSB is an SSB used by a path loss reference signal in an uplink transmission corresponding to the second network device.

In some embodiments, the processor is configured to read the computer program in the memory and perform the following step:
receiving SSB group information sent by the first network device, wherein the SSB group information is used for indicating a network device corresponding to each SSB group, and each SSB group includes at least one SSB.

In some embodiments, the processor is configured to read the computer program in the memory and perform the following steps:

determining, according to the path loss reference signal, a path loss of sending the preamble;
calculating, according to the path loss, a transmission power for sending the preamble; and
sending the preamble by using the transmission power.

In some embodiments, the processor is configured to read the computer program in the memory and perform the following step:

receiving, using a beam that is used to receive the PDCCH order, a PDCCH scheduling a random access response (RAR) and the RAR that are sent by the first network device;
or,
receiving, using a beam in a control resource set associated with a common search space (CSS) corresponding to a second network device, a PDCCH scheduling an RAR and the RAR that are sent by the second network device.

In some embodiments, the RAR includes timing advance group (TAG) identification information, and the TAG identification information is used for indicating the TAG corresponding to the TA included in the RAR.

In some embodiments, the information included in the PDCCH order includes: first indication information, where the first indication information is used for indicating a candidate cell identifier.

An embodiment of the present disclosure provides a network device, including: a memory, a transceiver, and a processor; wherein the memory is configured to store a computer program; the transceiver is configured to receive and send data under the control of the processor; and the processor is configured to read the computer program in the memory and perform the following steps:

determining information included in a PDCCH order; and
sending the PDCCH order to a terminal, and indicating, through the information included in the PDCCH order, a path loss reference signal and/or a beam for the terminal to send a preamble.

In some embodiments, the path loss reference signal is not quasi-co-located with a reference signal used by the terminal to receive the PDCCH order; and/or the beam is different from a beam used by the terminal to receive the PDCCH order.

In some embodiments, the processor is configured to read the computer program in the memory and perform one of the following steps:

indicating that a synchronization signal and PBCH block (SSB) included in the PDCCH order is used as the path loss reference signal for the terminal to send the preamble, wherein the SSB is associated with a second network device; or
setting a first codepoint in the PDCCH order, and indicating the path loss reference signal for the terminal to send the preamble through the first codepoint; or
setting a first indicator field in the PDCCH order, and indicating the path loss reference signal for the terminal to send the preamble through the first indicator field.

In some embodiments, the processor is configured to read the computer program in the memory and perform the following step:

indicating a TCI state through the first codepoint, wherein a type-D source reference signal included in the TCI state corresponding to the first codepoint is used as the path loss reference signal for sending the preamble.

In some embodiments, the processor is configured to read the computer program in the memory and perform the following step:
indicating a control resource set index of an active TCI state pool through the first indicator field, wherein a type-D source reference signal included in a first TCI state corresponding to the control resource set index is used as the path loss reference signal for the terminal to send the preamble, and the first TCI state is a preset TCI state in the active TCI state pool corresponding to the control resource set index.

In some embodiments, the processor is configured to read the computer program in the memory and perform one of the following steps:

indicating that a beam for receiving an SSB included in the PDCCH order is used as the beam for the terminal to send the preamble, wherein the SSB is associated with a second network device; or
setting a second codepoint in the PDCCH order, and indicating the beam for the terminal to send the preamble through the second codepoint; or
setting a second indicator field in the PDCCH order, and indicating the beam for the terminal to send the preamble through the second indicator field.

In some embodiments, the processor is configured to read the computer program in the memory and perform the following step:
indicating a TCI state through the second codepoint, wherein a beam for receiving a type-D source reference signal included in the TCI state corresponding to the second codepoint is used as the beam for the terminal to send the preamble.

In some embodiments, the processor is configured to read the computer program in the memory and perform the following step:
indicating a control resource set index of an active TCI state pool through the second indicator field, wherein a beam for receiving a type-D source reference signal included in a second TCI state is used as the beam for the terminal to send the preamble, and the second TCI state is a preset TCI state in the active TCI state pool corresponding to the control resource set index.

In some embodiments, the association between the SSB and the second network device includes at least one of the following:

a network device corresponding to an SSB group to which the SSB belongs is the second network device;
the SSB is an SSB in a type-D source reference signal included in a TCI state corresponding to the second network device among TCI states indicated by the first network device; or
the SSB is an SSB used by a path loss reference signal in an uplink transmission corresponding to the second network device.

In some embodiments, the processor is configured to read the computer program in the memory and perform the following steps:

grouping the SSBs according to the network device corresponding to each SSB to obtain SSB group information; and sending the SSB group information to the terminal;
wherein each SSB group includes at least one SSB.

In some embodiments, the processor is configured to read the computer program in the memory and perform the following step:
sending, to the terminal, a PDCCH for scheduling an RAR and the RAR.

In some embodiments, the RAR includes TAG identification information, and the TAG identification information is used for indicating the TAG corresponding to the TA included in the RAR.

In some embodiments, the information included in the PDCCH order includes: first indication information, where the first indication information is used for indicating a candidate cell identifier.

An embodiment of the present disclosure provides a preamble sending apparatus, including:

a first receiving unit, configured to receive a physical downlink control channel (PDCCH) order sent by a first network device;
a first determining unit, configured to determine, according to information included in the PDCCH order, a path loss reference signal and/or a beam for sending a preamble; and
a first sending unit, configured to send the preamble according to the path loss reference signal and/or the beam.

An embodiment of the present disclosure provides a preamble sending apparatus, including:

a second determining unit, configured to determine information included in a PDCCH order; and
an indicating unit, configured to send the PDCCH order to a terminal, and indicate, through the information included in the PDCCH order, a path loss reference signal and/or a beam for the terminal to send a preamble.

An embodiment of the present disclosure provides a processor-readable storage medium having a computer program stored thereon. When the computer program is executed by a processor, the steps of the preamble sending method applied to a terminal are implemented.
An embodiment of the present disclosure provides a processor-readable storage medium having a computer program stored thereon. When the computer program is executed by a processor, the steps of the preamble sending method applied to a network device are implemented.
The technical solution provided in this disclosure has the following beneficial effects: according to the embodiment of the present disclosure, the terminal determines the path loss reference signal and/or beam for sending the preamble based on the information included in the PDCCH order sent by the first network device, which can ensure that network devices other than the first network device can receive the preamble in a multi-TRP transmission scenario, thereby improving the accuracy for the TRP to estimate the initial TA in the multi-TRP transmission scenario.

## BRIEF DESCRIPTION OF THE DRAWINGS

Fig. 1 is a flow chart of a preamble sending method according to an embodiment of the present disclosure;
Fig. 2 is a schematic diagram of a random access channel (RACH) process between two TRPs;
Fig. 3 is another schematic diagram of an RACH process between two TRPs;
Fig. 4 is a schematic diagram of a media access control (MAC) control element (CE) according to an embodiment of the present disclosure;
Fig. 5 is another flow chart of a preamble sending method according to an embodiment of the present disclosure;
Fig. 6 is a structural diagram of a preamble sending apparatus according to an embodiment of the present disclosure;
Fig. 7 is another structural diagram of a preamble sending apparatus according to an embodiment of the present disclosure;
Fig. 8 is a structural diagram of a terminal according to an embodiment of the present disclosure;
Fig. 9 is a structural diagram of a network device according to an embodiment of the present disclosure.

## DETAILED DESCRIPTION

To make the technical problems to be solved by the present disclosure, technical solutions, and advantages more clear, a detailed description will be given below in conjunction with the accompanying drawings and specific embodiments. In the following description, specific details such as specific configurations and components are provided only to help fully understand the embodiments of the present disclosure. Therefore, it should be clear to those skilled in the art that various changes and modifications can be made to the embodiments described herein without departing from the scope and spirit of the present disclosure. In addition, for the sake of clarity and brevity, descriptions of known functions and configurations have been omitted.
It should be understood that references throughout this specification to "one embodiment" or "an embodiment" mean that a particular feature, structure, or characteristic associated with the embodiment is included in at least one embodiment of the present disclosure. Therefore, the appearances of "in one embodiment" or "in an embodiment" throughout this specification do not necessarily refer to the same embodiment. Furthermore, these particular features, structures, or characteristics may be combined in any suitable manner in one or more embodiments.
In the various embodiments of the present disclosure, it should be understood that the sequence numbers of the following processes do not mean the order of execution. The execution order of each process should be determined by its function and internal logic, and should not constitute any limitation on the implementation process of the embodiments of the present disclosure.
In the embodiments of the present disclosure, the term "and/or" describes the relationship between associated objects, indicating that three possible relationships exist. For example, "A and/or B" can represent three situations: A exists alone, A and B exist simultaneously, and B exists alone. The character "/" generally indicates that the associated objects are in an "or" relationship.
In the embodiments of the present disclosure, the term "plurality" refers to two or more than two, and other quantifiers are similar thereto.

The following will be combined with the accompanying drawings in the embodiments of the present disclosure to clearly and completely describe the technical solutions in the embodiments of the present disclosure. Obviously, the embodiments described are only part of the embodiments of the present disclosure and not all of the embodiments. Based on the embodiments of the present disclosure, all other embodiments obtained by ordinary technicians in this field without making any creative efforts shall fall within the scope of protection of the present disclosure.

Embodiments of the present disclosure of the present disclosure provide a preamble sending method and apparatus, a terminal and a network device, which are used to solve the problem that the random access method in the related art causes a TRP in the multi-TRP scenario to be unable to receive the preamble sent by a terminal.

The method and the apparatus are based on the same application concept. Since the principles of solving problems by the method and the apparatus are similar, for the implementation of one of the apparatus and the method, reference may be made to the other of the apparatus and the method, and the repeated parts will not be repeated.

As shown in Fig. 1, an embodiment of the present disclosure provides a preamble sending method, which is applied to a terminal and specifically includes the following steps 101 to 103.

Step 101: A terminal receives a physical downlink control channel (PDCCH) order sent by a first network device.

The first network device sends a PDCCH order. In some embodiments, the PDCCH order may be sent via downlink control information (DCI) format 1_0. The beam used by the first network device to send the PDCCH order is the beam indicated by the TCI state of the control resource set (CORESET) corresponding to the PDCCH.

Step 102: The terminal determines, according to information included in the PDCCH order, a path loss reference signal and/or a beam for sending a preamble.

Step 103: The terminal sends the preamble according to the path loss reference signal and/or the beam.

In this embodiment, the first network device sends a PDCCH order to the terminal, instructing the terminal to initiate a physical random access channel (PRACH). If the random access preamble index field in the PDCCH order is not 0, it indicates that the first network device triggers a contention-free random access (CFRA) procedure. Otherwise, the first network device triggers a contention-based random access (CBRA) procedure.

The terminal determines a path loss reference signal for sending a preamble and /or a beam for sending a preamble based on information contained in a PDCCH order, and may calculate the transmission power of the preamble based on the determined path loss reference signal, send the preamble at the transmission power, and/or send the preamble based on the determined beam. Compared to the terminal using an SSB that is quasi-co-located with a PDCCH-order DM-RS as a path loss reference signal and using a receive beam that is quasi-co-located with a PDCCH-order DM-RS to send a preamble, the embodiment of the present disclosure can ensure that network devices other than the first network device in a multi-TRP scenario can receive the preamble, thereby being able to use the preamble to estimate the timing advance (TA) of the link between the terminal and the other network devices.

In the embodiment of the present disclosure, the terminal determines the path loss reference signal and/or beam for sending the preamble based on the information included in the PDCCH order sent by the first network device, which can ensure that other network devices except the first network device can receive the preamble in the multi-TRP transmission scenario, thereby improving the accuracy for the TRP to estimate the initial TA in the multi-TRP transmission scenario.

In some embodiments, the information included in the PDCCH order includes: first indication information, where the first indication information is used for indicating a candidate cell identifier (ID). The candidate cell includes a target cell to which the terminal sends a PRACH, and the target cell includes a target network device to which the terminal sends the PRACH, that is, a second network device. Both the first network device and the second network device may be a TRP, for example, the first network device is TRP1 and the second network device is TRP2.

After receiving the PDCCH order, the terminal can determine, based on the first indication information contained in the PDCCH order, the target cell to which the PRACH is initiated; the terminal selects the target network device (i.e., the second network device) in the target cell to initiate PRACH, for example, sending a preamble to the target network device (i.e., the second network device) according to the path loss reference signal and/or beam.

The candidate cell identifier is, for example, an additional physical cell identifier (PCI), an additional PCI index, or an additional PCI indicator.

In some embodiments, the path loss reference signal is not quasi-co-located with a reference signal used to receive the PDCCH order; and/or the beam is different from a beam used to receive the PDCCH order.

In this embodiment, the path loss reference signal determined by the terminal based on the information included in the PDCCH order is not quasi-co-located with the reference signal used for reception of the PDCCH order in the related art, thereby ensuring the accuracy of calculation of the transmission power of the preamble. The beam used for sending the preamble that is determined by the terminal based on the information included in the PDCCH order is different from the beam used for reception of the PDCCH order in the related art, thereby ensuring that the preamble sent by the terminal is accurately received by the second network device, and ensuring the accuracy of TA estimation of the second network device.

As an optional embodiment, determining, according to information included in the PDCCH order, a path loss reference signal for sending a preamble includes one of the following (1), (2) and (3).

(1) Determining that a synchronization signal and PBCH block (SSB) included in the PDCCH order is used as the path loss reference signal for sending the preamble, the SSB being associated with the second network device.

In this embodiment, the terminal uses the SSB included in the PDCCH order signaling as a path loss reference signal in the calculation of the preamble transmission power. The PDCCH order signaling may indicate the index of the synchronization signal (SS) or the index of the physical broadcast channel (PBCH).

The path loss reference signal SSB used for sending the preamble is associated with the second network device, that is, the terminal uses the SSB included in the PDCCH order that is associated with the second network device as the path loss reference signal for sending the preamble.

(2) Determining a path loss reference signal for sending a preamble according to a first codepoint included in the PDCCH order.

In some embodiments, determining the path loss reference signal for sending the preamble based on the first codepoint included in the PDCCH order includes: determining that a type-D source reference signal (type-D source RS) included in a transmission configuration indicator (TCI) state corresponding to the first codepoint is used as the path loss reference signal for sending the preamble.

In this embodiment, the network device can add a codepoint indicating the TCI state into the PDCCH order (DCI format 1_0), instructing the terminal to use the type-D source RS (possibly SSB/CSI-RS) included in the TCI state corresponding to the codepoint as the path loss reference signal for preamble power calculation. The type-D source RS may be SSB or CSI-RS.

(3) Determining a path loss reference signal for sending a preamble according to a first indicator field included in the PDCCH order.

In some embodiments, the first indicator field is used for indicating a control resource set (CORESET) index of an active TCI state pool, and determining a path loss reference signal for sending a preamble based on the first indicator field contained in the PDCCH order includes: determining that a type-D source RS included in a first TCI state is used as the path loss reference signal for sending the preamble, wherein the first TCI state is a preset TCI state in the active TCI state pool corresponding to the control resource set index.

In this embodiment, the network device may add a control resource set index (CORESETPoolIndex) for indicating the active TCI state pool into the PDCCH order (DCI format 1_0). The terminal uses the type-D source RS (which may be SSB/CSI-RS) contained in the first TCI state in the TCI state pool activated by the CORESETPoolIndex + MAC CE indicated by the first network device as the path loss reference signal used in the calculation of the preamble power. The first TCI state may be the TCI state with the lowest TCI state ID in the TCI state pool corresponding to the CORESETPoolIndex. It should be noted that the first TCI state may also be other TCI states in the TCI state pool, which can be selected as needed.

As an optional embodiment, the association between the SSB and the second network device includes at least one of the following (1), (2) or (3).

(1) A network device corresponding to an SSB group to which the SSB belongs is the second network device.

In some embodiments, the method further includes: receiving SSB group information sent by the first network device, wherein the SSB group information is used for indicating a network device corresponding to each SSB group, and each SSB group includes at least one SSB.

In this embodiment, the SSBs are grouped, and each group of SSBs corresponds to one TRP, for example: TRP1 {SSB1, SSB3, SSB5}; TRP2 {SSB2, SSB4, SSB6}. The first network device sends SSB group information to the terminal and informs the terminal to which group the SSB used as the path loss reference signal for sending the preamble belongs. The terminal can determine the SSB associated with the second network device based on the group information, and thus use the SSB as the path loss reference signal for sending the preamble.

(2) The SSB is an SSB in a type-D source RS included in a TCI state corresponding to the second network device among TCI states indicated by the first network device.

In this embodiment, the first network device may indicate, to the terminal, the TCI state corresponding to each network device, and the terminal determines that the SSB in the type-D source RS included in the TCI state corresponding to the second network device is used as the path loss reference signal for sending the preamble. For example, the SSB used as the path loss reference signal for sending the preamble is the SSB in the type-D source RS included in the second TCI state (corresponding to TRP2) among the two TCI states indicated by the first network device via DCI format 1_1/1_2.

(3) The SSB is an SSB used by a path loss reference signal in an uplink transmission corresponding to the second network device. For example, the SSB is the SSB used in the PL RS in the uplink transmission corresponding to the second TRP.

In this embodiment, the terminal uses the SSB included in the PDCCH order and associated with the second network device as a path loss reference signal for sending the preamble, and can determine the transmission power of the preamble based on the path loss reference signal to ensure that the second network device can accurately receive the preamble sent by the terminal.

As an optional embodiment, determining a beam for sending a preamble according to information included in the PDCCH order includes one of the following (A), (B) and (C).

(A) Determining that a beam for receiving an SSB included in the PDCCH order is used as the beam for sending the preamble, wherein the SSB is associated with the second network device.

In this embodiment, the terminal transmits a preamble by using a beam that is used to receive the SSB included in the PDCCH order. The PDCCH order signaling may indicate an index of an SS or a PBCH. The SSB included in the PDCCH order is associated with the second network device. When the terminal uses the beam that is used to receive the SSB as the beam for sending the preamble, it is ensured that the second network device can accurately receive the preamble.

The association between the SSB and the second network device may include at least one of the following:

a network device corresponding to an SSB group to which the SSB belongs is the second network device;
the SSB is an SSB in a type-D source RS included in a TCI state corresponding to the second network device among TCI states indicated by the first network device; or
the SSB is an SSB used by a path loss reference signal in an uplink transmission corresponding to the second network device.

(B) Determining a beam for sending the preamble according to a second codepoint included in the PDCCH order.

In some embodiments, determining the beam for sending the preamble based on the second codepoint included in the PDCCH order includes: determining that a beam that is used to receive the type-D source RS included in the TCI state corresponding to the second codepoint is used as the beam for sending the preamble.

The second codepoint may be the same as or different from the first codepoint.

In this embodiment, the first network device may add a second codepoint indicating the TCI state into the PDCCH order (DCI format 1_0), instructing the terminal to use the beam that is used to receive the type-D source RS (possibly SSB/CSI-RS) included in the TCI state corresponding to the second codepoint as the beam for sending the preamble. This ensures that the second network device accurately receives the preamble. The type-D source RS may be either SSB or CSI-RS.

(C) Determining a beam for sending the preamble according to a second indicator field included in the PDCCH order.

In some embodiments, the second indicator field is used for indicating the control resource set index of the active TCI state pool, and determining the beam for sending the preamble based on the second indicator field contained in the PDCCH order includes: determining that the beam used to receive the type-D source reference signal included in the second TCI state is used as the beam for sending the preamble, and the second TCI state is a preset TCI state in the active TCI state pool corresponding to the control resource set index.

The second indicator field may be the same as or different from the first indicator field, and the second TCI state may be the same as or different from the first TCI state.

In this embodiment, the first network device may add a CORESETPoolIndex for indicating the active TCI state pool into the PDCCH order (DCI format 1_0). The terminal uses the beam that is used to receive the type-D source RS (which may be SSB/CSI-RS) included in the second TCI state in the TCI state pool activated by the CORESETPoolIndex + MAC CE indicated by the first network device as the beam for sending the preamble, which can ensure that the second network device accurately receives the preamble. The second TCI state may be the TCI state with the lowest TCI state ID in the TCI state pool corresponding to the CORESETPoolIndex. It should be noted that the second TCI state may also be other TCI states in the TCI state pool, which can be selected as needed.

It should be noted that the terminal can determine the path loss reference signal for sending the preamble and/or the beam for sending the preamble based on the information included in the PDCCH order sent by the first network device. In some embodiments, the way in which the terminal determines the path loss reference signal for sending the preamble may be associated with the way in which the terminal determines the beam for sending the preamble, for example: the terminal determines that the SSB contained in the PDCCH order is used as the path loss reference signal for sending the preamble, and uses the beam that is used to receive the SSB as the beam for sending the preamble; the terminal determines that the type-D source RS included in the TCI state corresponding to the first codepoint is used as the path loss reference signal for sending the preamble, and uses the beam that is used to receive the type-D source RS as the beam for sending the preamble; the terminal determines, based on the first indicator field, that the type-D source RS contained in the first TCI state is used as the path loss reference signal for sending the preamble, and uses the beam that is used to receive the type-D source RS as the beam for sending the preamble.

As an optional embodiment, sending, by the terminal, the preamble according to the path loss reference signal includes:

determining the path loss of sending the preamble according to the path loss reference signal; calculating the transmission power for sending the preamble according to the path loss; and sending the preamble by using the transmission power.

In some embodiments, the transmission power of the preamble may be determined using the following formula:

$$P_{PRACH,b,f,c}(i) = \min\{P_{CMAX,f,c}(i), P_{PRACH,target,f,c} + PL_{b,f,c}\}[dBm]$$

where, $PL_{b,f,c}$ represents the path loss, which is determined based on the path loss reference signal; $P_{PRACH,b,f,c}(i)$ represents the transmission power of the preamble; $P_{CMAX,f,c}(i)$ represents the maximum output power of the carrier f used for the serving cell c in the transmission slot i; and $P_{PRACH,target,f,c}$ is the target received power of the physical random access channel provided for the uplink bandwidth part (BWP) b of the carrier f of the serving cell c.

In this embodiment, after determining a path loss reference signal for sending a preamble, the terminal calculates the path loss and, based on the calculated path loss, determines the transmission power for sending the preamble, and transmits the preamble at this transmission power, thereby ensuring that the second network device accurately receives the real-time preamble. In some embodiments, the terminal transmits the preamble by using a determined beam. After receiving the preamble, the second network device can estimate the TA and send an RAR MAC protocol data unit (PDU) containing the TA value to the first network device, the first network device then transmits the RAR MAC PDU to the terminal. Alternatively, the second network device estimates the TA and sends an RAR MAC PDU containing the TA value to the terminal.

As an optional embodiment, the method further includes:

receiving, using a beam that is used to receive the PDCCH order, a PDCCH scheduling a random access response (RAR) and the RAR that are sent by the first network device;
or,
receiving, using a beam in a control resource set associated with a common search space (CSS) corresponding to a second network device, a PDCCH scheduling an RAR and the RAR that are sent by the second network device.

In some embodiments, the RAR carries timing advance group (TAG) identification information, where the TAG identification information is used for indicating a TAG corresponding to a timing advance (TA) included in the RAR. In this embodiment, after receiving the RAR, the terminal can obtain one TAG identification and a TA value by decoding the RAR. The TA value is the initial value for the terminal to adjust the TA, and the TAG is the TAG corresponding to the TA value. The terminal can determine the TAG corresponding to the TA value based on the TAG identification information, thereby determining which network device the TA value corresponds to, and using the TA value as the initial TA value for subsequent TA adjustment of the corresponding network device.

In this embodiment, if the TRP sending the PDCCH order is the same as the TRP sending the scheduled RAR, that is, the first network device sends a PDCCH order to the terminal, and the first network device sends an RAR to the terminal, then the terminal uses the beam used to receive the PDCCH order to receive the PDCCH for scheduling the RAR and the RAR. For example, assuming the first network device is TRP1 and the second network device is TRP2, as shown in Fig. 2: TRP1 sends a PDCCH order to the terminal, and the terminal sends a preamble using the determined transmission power and beam; TRP2 receives the preamble; and TRP1 sends the PDCCH for scheduling the RAR and the RAR to the terminal.

If the TRP sending the PDCCH order differs from the TRP sending the scheduled RAR, that is, if the first network device sends the PDCCH order to the terminal and the second network device sends the RAR to the terminal, the terminal uses the beam in the CORESET associated with the CSS corresponding to the second network device to receive the PDCCH scheduling the RAR and the RAR. For example, assuming the first network device is TRP1 and the second network device is TRP2, as shown in Fig. 3: TRP1 sends the PDCCH order to the terminal, and the terminal transmits a preamble by using the determined transmission power and beam; TRP2 receives the preamble, and TRP2 sends the PDCCH scheduling the RAR and the RAR to the terminal. In some embodiments, if TRP2 is an inter-cell multi-TRP, it is necessary to separately configure Type-1 CSS for the cell in which TRP2 resides. The TRP in this case can be represented by the TCI state ID, CORESETPoolIndex, or SRS resource set ID.

Since the conventional protocol only specifies the beam used to receive the RAR when the CFRA triggered by the PDCCH order is for a secondary cell, if the multi-TRP case is taken into account, the protocol can be modified as follows: if the UE attempts to detect the DCI format 1_0 with CRC scrambled by the corresponding RA-RNTI in response to a PRACH transmission initiated by a PDCCH order that triggers a contention-free random access procedure for the SpCell, the UE may assume that the PDCCH that includes the DCI format 1_0 and the PDCCH order have same DM-RS antenna port quasi co-location properties. If the UE attempts to detect the DCI format 1_0 with CRC scrambled by the corresponding RA-RNTI in response to a PRACH transmission initiated by a PDCCH order that triggers a contention-free random access procedure for a secondary cell, the UE may assume the DM-RS antenna port quasi co-location properties of the CORESET associated with the Type1-PDCCH CSS set for receiving the PDCCH that includes the DCI format 1_0.

The following describes the process of sending the preamble in a specific embodiment.

As an optional embodiment, the terminal uses the SSB included in the PDCCH order signaling as the PL RS in the power calculation for sending the preamble, and uses the beam that is used to receive the SSB to send the preamble. Specifically, the process includes the following steps 21 to 26.

Step 21: The first network device configures a TCI state pool through RRC signaling, where the RRC signaling includes a TCI state ID sequence, e.g., SEQUENCE (SIZE (1..maxNrofTCI-States)) OF TCI-StateId.

The first network device activates the TCI state corresponding to CORESETPoolIndex of 1 in the TCI state pool through MAC CE. The MAC CE used for activation is shown in Fig. 4, including the control resource set identifier (CORESET Pool ID), serving cell ID (Serving Cell ID), and bandwidth part ID (BWP ID).

The first network device indicates to the terminal through DCI format 1_1/1_2 that the beam used for uplink transmission and downlink reception scheduled by the PDCCH corresponding to the CORESET whose CORESETPoolIndex is 1 is the beam indicated by TCI state #1.

Step 22: In slot #n, TRP1 (corresponding to CORESETPoolIndex of 1) sends a PDCCH order (DCI format 1_0). The beam used to send the PDCCH order is the beam indicated by TCI state #1. The PDCCH order contains a preamble index (ra_PreambleIndex) of 3 and an SS/PBCH index of 5.

Step 23: The terminal initiates a contention-free random access (CFRA) according to the PDCCH order. If the preamble index (*ra_PreambleIndex*) included in the PDCCH order is non-zero, the PDCCH order triggers a CFRA procedure. The terminal sends preamble #3 on the corresponding physical random access channel occasion (RO). The RO for sending the preamble is determined according to the PRACH RO associated with the SS/PBCH Index #5 included in the PDCCH order. This association can be configured to the terminal by the first network device via radio resource control (RRC) signaling (ssb-perRACH-OccasionAndCB-PreamblesPerSSB). The time and frequency resources of the RO can be obtained through RRC configuration and lookup table. For example, the RRC configuration indicates the frequency domain resources and time domain resources of msg1. The configuration signaling indicating the frequency domain resources can be:

ENUMERATED {one, two, four, eight} (Frequency domain resource indication) (i.e., the frequency domain resource indication is {1, 2, 4, 8})

INTEGER(0..maxNrofPhysicalResourceBlocks-1), (Frequency domain resource of PRACH occasion) (i.e., the frequency domain resource of the PRACH occasion can be an integer from 0 to the maximum number of physical resource blocks).

Step 24: The terminal uses the SSB (SS/PBCH Index) included in the PDCCH order signaling as the path loss reference signal in the calculation of the preamble transmission power, and uses the beam that is used to receive the SSB as the beam for sending the preamble in the CFRA procedure.

Step 25: TRP2 (i.e., the second network device) receives the preamble sent by the terminal, estimates the timing advance (TA), and sends an RAR MAC PDU containing the TA value to TRP1 (i.e., the first network device). TRP1 then sends the RAR MAC PDU to the terminal. TRP1 incorporates the timing advance group ID (TAG ID) #2 into the RAR MAC PDU, indicating to the terminal that the TA carried in the RAR MAC PDU is the TA corresponding to TRP2.

Step 26: The terminal receives the PDCCH scheduling the RAR by using the beam that is used to receive the PDCCH order, and receives the scheduled RAR within an ra-responseWindow. The RAR carries a TAG ID, which indicates the TAG corresponding to the TA value in the RAR. The terminal demodulates and decodes the RAR to obtain TA2 corresponding to TAG ID #2. The terminal uses TA2 as the initial TA value for TRP2 and performs subsequent closed-loop TA adjustment.

As another optional embodiment, the terminal uses the type-D source RS (SSB/CSI-RS) in the TCI state indicated by the newly added TCI state indicator field in the PDCCH order as the PL RS used in the preamble power calculation, and uses the beam that is used to receive the SSB/CSI-RS to send the preamble. Specifically, the process includes the following steps 31 to 36.

Step 31, step 32 and step 33 are the same as step 21, step 22 and step 23, and are not described in detail here.

Step 34: The terminal uses the type-D source RS-SSB3 in TCI state 3 indicated by the newly added TCI state indicator field in the PDCCH order as the path loss reference signal for preamble power calculation, and transmits the preamble by using the beam that is used to receive SSB3. The DCI fields in the PDCCH order are shown in Table 1.

Table 1: DCI fields of PDCCH order

| PDCCH order field | size | description |
|---|---|---|
| DCI format identifier | 1 bit | The value being "1" indicates DCI Format 1_0 |

(continued)

| PDCCH order field | size | description |
|---|---|---|
| Frequency domain resource assignment | $\lceil \log_2(N_{RB}^{DL,BWP} \cdot (N_{RB}^{DL,BWP} + 1)/2) \rceil$ | $N_{RB}^{DL,BWP}$ is the size of DL BWP. This field indicates the frequency domain resources of the PDCCH order. |
| Random Access Preamble index | 6 bits | ra_PreambleIndex. If this is all 0 a CBRA procedure is triggered, else the ra_PreambleIndex is used for a CFRA procedure. |
| Uplink (UL)/Supplementary Uplink (SUL) indicator | 1 bit | If SUL is configured, and ra_PreambleIndex is not all 0, this field indicates UL carrier, else it is reserved. When indicating UL carrier: "0" is for normal uplink and "1" is for SUL. |
| SS/PBCH index | 6 bits | If ra_PreambleIndex is not all zeros, the SS/PBCH block index used to determine the associated RO to transmit the preamble on, else reserved. |
| PRACH Mask Index | 4 bits | If ra_PreambleIndex is not all zeros, this parameter is used to determine the RO to transmit the preamble on, else reserved. |
| Reserved bits | 10 bits | |
| TCI states indicator | xxx bits | ID of the TCI states for Msg1 |

Step 35: TRP2 (i.e., the second network device) receives the preamble sent by the terminal, estimates the TA, and sends an RAR MAC PDU containing the TA value to TRP1 (i.e., the first network device). TRP1 then sends the RAR MAC PDU to the terminal. TRP1 incorporates TAG ID #2 into the RAR MAC PDU, indicating to the terminal that the TA carried in the RAR MAC PDU is the TA corresponding to TRP2.

Step 36: The terminal receives the PDCCH scheduling the RAR by using the beam that is used to receive the PDCCH order, and receives the scheduled RAR within the ra-responseWindow. The RAR carries a TAG ID, which indicates the TAG corresponding to the TA value in the RAR. The terminal demodulates and decodes the RAR to obtain TA2 corresponding to TAG ID #2. The terminal uses TA2 as the initial TA value for TRP2 and performs subsequent closed-loop TA adjustment.

As another optional embodiment, the terminal uses the type-D source RS (SSB/CSI-RS) included in the TCI state with the lowest ID in the TCI state pool that is activated by the CORESETPoolIndex + MAC CE indicated in the PDCCH order (DCI format 1_0) and corresponds to this CORESETPoolIndex as the PL RS in the calculation of the preamble power, and uses the beam that is used to receive the SSB/CSI-RS to send the preamble. Specifically, the process includes the following steps 41 to 46.

Step 41, step 42 and step 43 are the same as step 21, step 22 and step 23, and are not described in detail here.

Step 44: the terminal uses the type-D source RS (CSI-RS1) with the lowest TCI state ID (TCI state ID #1) in CORESETPoolIndex #1 indicated by the newly added CORESETPoolIndex indicator field in the PDCCH order as the path loss reference signal for preamble power calculation, and transmits the preamble by using the beam that is used to receive CSI-RS1. The DCI fields in the PDCCH order are shown in Table 2 below.

Step 45 is the same as step 25 (or step 35), and step 46 is the same as step 26 (or step 36), and thus will not be described in detail here.

The embodiment of the present disclosure provides a rule for determining the path loss reference signal in the uplink Msg1 power control and a rule for determining the transmission beam when the TA value of the second TRP is determined according to CFRA triggered by the PDCCH order in multi-TRP transmission based on multi-DCI scheduling. By indicating the TCI state or SSB index or CORESETPoolIndex in the PDCCH order, the beam and PL RS for sending MSG1 are indicated to the terminal, thereby avoiding the situation where TRP2 cannot receive the preamble sent by the terminal and cannot estimate the TA of the UE-to-TRP2 link when using the traditional SSB/CSI-RS QCLed with PDCCH order DM-RS as the PL RS or using the beam that is used to receive SSB/CSI-RS as the beam for sending the preamble, thereby improving the accuracy of the initial TA estimation of the second TRP in multi-TRP transmission.

Table 2: DCI fields of PDCCH order

| PDCCH order field | size | description |
|---|---|---|
| DCI format identifier | 1 bit | The value being "1" indicates DCI Format 1_0 |
| Frequency domain resource assignment | $\lceil \log_2(N_{RB}^{DL,BWP} \cdot (N_{RB}^{DL,BWP} + 1)/2) \rceil$ | $N_{RB}^{DL,BWP}$ is the size of DL BWP. This field indicates the frequency domain resources of the PDCCH order. |
| Random access preamble index | 6 bits | ra_PreambleIndex. If this is all 0 a CBRA procedure is triggered, else the ra_PreambleIndex is used for a CFRA procedure. |
| UL/SUL indicator | 1 bit | If SUL is configured, and ra_PreambleIndex is not all 0, this field indicates UL carrier, else it is reserved. When indicating UL carrier: "0" is for normal uplink and 1" is for SUL. |
| SS/PBCH index | 6 bits | If ra_PreambleIndex is not all zeros, the SS/PBCH block index used to determine the associated RO to transmit the preamble on, else reserved. |
| PRACH Mask Index | 4 bits | If ra_PreambleIndex is not all zeros, |
| | | this parameter is used to determine the RO to transmit the preamble on, else reserved. |
| Reserved bits | 10 bits | |
| CORESETPoolIndex indicator | xxx bits | ID of the CORESETPoolIndex |

In the embodiment of the present disclosure, the terminal determines the path loss reference signal and/or beam for sending the preamble based on the information included in the PDCCH order sent by the first network device, which can ensure that other network devices except the first network device can receive the preamble in the multi-TRP transmission scenario, thereby improving the accuracy for the TRP to estimate the initial TA in the multi-TRP transmission scenario.

As shown in Fig. 5, an embodiment of the present disclosure further provides a preamble sending method, which is applied to a network device. The method includes:

Step 501: A first network device determines information included in a PDCCH order;

Step 502: The first network device sends the PDCCH order to a terminal, and indicates, through the information included in the PDCCH order, a path loss reference signal and/or a beam for the terminal to send a preamble.

In this embodiment, the first network device may be a network device communicating with the terminal. In a multi-TRP scenario, the first network device may be the TRP currently communicating with the terminal. The first network device instructs the terminal to initiate a PRACH through a PDCCH order, and sets information in the PDCCH order to indicate to the terminal a path loss reference signal and/or beam for sending a preamble.

The terminal receives the PDCCH order sent by the first network device, and determines the path loss reference signal for sending the preamble and/or the beam for sending the preamble based on the information included in the PDCCH order, and can calculate the transmission power of the preamble based on the determined path loss reference signal, send the preamble with the said transmission power, and/or send the preamble based on the determined beam. Compared with the terminal using the SSB that is quasi-co-located with the PDCCH order DM-RS as the path loss reference signal and using the receiving beam that is quasi-co-located with the PDCCH order DM-RS to send the preamble, the embodiment of the present disclosure can ensure that network devices other than the first network device in the multi-TRP scenario can receive the preamble, so that the timing advance (TA) of the link between the terminal and the other network devices can be estimated by using the preamble.

In an embodiment of the present disclosure, a network device sends a PDCCH order to a terminal, and the information included in the PDCCH order is used to indicate to the terminal a path loss reference signal and/or beam for sending a preamble, so that the terminal can determine the path loss reference signal and/or beam for sending the preamble according to the information in the PDCCH order, and can ensure that other network devices except the first network device can receive the preamble in a multi-TRP transmission scenario, thereby improving the accuracy for the TRP to estimate the initial TA in the multi-TRP transmission scenario.

In some embodiments, the information included in the PDCCH order includes: first indication information, where the first indication information is used for indicating a candidate cell identifier. The candidate cell includes a target cell to which the terminal sends a PRACH, and the target cell includes a target network device to which the terminal sends the PRACH, that is, a second network device. The first network device and the second network device may be TRPs, for example, the first network device is TRP1 and the second network device is TRP2.

After receiving the PDCCH order, the terminal can determine, based on the first indication information contained in the PDCCH order, the target cell to which the PRACH is initiated; the terminal selects the target network device (i.e., the second network device) in the target cell to initiate PRACH, e.g., sending a preamble to the target network device (i.e., the second network device) according to the path loss reference signal and/or beam.

The candidate cell identifier is, for example: additional PCI, additional PCI index, additional PCI indicator.

In some embodiments, the path loss reference signal is not quasi-co-located with a reference signal used by the terminal to receive the PDCCH order; and/or the beam is different from a beam used by the terminal to receive the PDCCH order.

In this embodiment, the path loss reference signal indicated by the information included in the PDCCH order is not quasi-co-located with the reference signal used for reception of the PDCCH order in the related art, thereby ensuring the accuracy of calculation of the transmission power of the preamble. The beam used for sending the preamble that is determined by the terminal based on the information included in the PDCCH order is different from the beam used by the terminal to receive the PDCCH order, thereby ensuring that the preamble sent by the terminal is accurately received by the second network device, and ensuring the accuracy of TA estimation of the second network device.

As an optional embodiment, indicating, through the information included in the PDCCH order, the path loss reference signal for the terminal to send the preamble includes one of the following (1), (2) and (3).

(1) Indicating that an SSB included in the PDCCH order is used as the path loss reference signal for the terminal to send the preamble, wherein the SSB is associated with a second network device.

In this embodiment, the first network device instructs the terminal to use the SSB included in the PDCCH order signaling as a path loss reference signal for the calculation of the preamble transmission power. The PDCCH order signaling may indicate the index of the SS or the index of the PBCH.

The path loss reference signal SSB used to send the preamble is associated with the second network device, that is, the first network device instructs the terminal to use the SSB associated with the second network device included in the PDCCH order as the path loss reference signal for sending the preamble.

(2) Setting a first codepoint in the PDCCH order, and indicating the path loss reference signal for the terminal to send the preamble through the first codepoint.

In some embodiments, indicating the path loss reference signal for the terminal to send the preamble through the first codepoint includes: indicating a TCI state through the first codepoint, wherein a type-D source reference signal included in the TCI state corresponding to the first codepoint is used as the path loss reference signal for sending the preamble.

In this embodiment, the network device may add a first codepoint indicating the TCI state in the PDCCH order (DCI format 1_0), instructing the terminal to use the type-D source RS (possibly SSB/CSI-RS) included in the TCI state corresponding to the first codepoint as the path loss reference signal for preamble transmission power calculation. The type-D source RS may be SSB or CSI-RS.

(3) Setting a first indicator field in the PDCCH order, and indicating the path loss reference signal for the terminal to send the preamble through the first indicator field.

In some embodiments, indicating the path loss reference signal for the terminal to send the preamble through the first indicator field includes: indicating a control resource set index of an active TCI state pool through the first indicator field, wherein a type-D source reference signal included in a first TCI state corresponding to the control resource set index is used as the path loss reference signal for the terminal to send the preamble, and the first TCI state is a preset TCI state in the active TCI state pool corresponding to the control resource set index.

In this embodiment, the network device may add a CORESETPoolIndex for indicating the active TCI state pool into the PDCCH order (DCI format 1_0). The terminal uses the type-D source RS (which may be SSB/CSI-RS) contained in the first TCI state in the TCI state pool activated by the CORESETPoolIndex + MAC CE indicated by the first network device as the path loss reference signal for preamble transmission power calculation. The first TCI state may be the TCI state with the lowest TCI state ID in the TCI state pool corresponding to the CORESETPoolIndex.

As an optional embodiment, the association between the SSB and the second network device includes at least one of the following (1), (2) or (3).

(1) A network device corresponding to an SSB group to which the SSB belongs is the second network device.

In some embodiments, the method further includes: grouping the SSBs according to the network device corresponding to each SSB to obtain SSB group information; sending the SSB group information to the terminal; wherein each SSB group includes at least one SSB.
In this embodiment, the SSBs are grouped, and each group of SSBs corresponds to one TRP, for example: TRP1 {SSB1, SSB3, SSB5}; TRP2 {SSB2, SSB4, SSB6}. The first network device sends SSB group information to the terminal and informs the terminal to which group the SSB used as the path loss reference signal for sending the preamble belongs. The terminal can determine the SSB associated with the second network device based on the group information, and thus use the SSB as the path loss reference signal for sending the preamble.
(2) The SSB is an SSB in a type-D source reference signal included in a TCI state corresponding to the second network device among TCI states indicated by the first network device.
In this embodiment, the first network device may indicate the TCI state corresponding to each network device to the terminal, and the terminal determines that the SSB in the type-D source RS included in the TCI state corresponding to the second network device is used as the path loss reference signal for sending the preamble. For example, the SSB used as the path loss reference signal for sending the preamble is the SSB in the type-D source RS included in the second TCI state (corresponding to TRP2) among the two TCI states indicated by the first network device via DCI format 1_1/1_2.
(3) The SSB is an SSB used by a path loss reference signal in an uplink transmission corresponding to the second network device. For example, the SSB is the SSB used in the PL RS in the uplink transmission corresponding to the second TRP.
In this embodiment, the first network device instructs the terminal to use the SSB included in the PDCCH order and associated with the second network device as a path loss reference signal for sending the preamble. The transmission power of the preamble can be determined based on the path loss reference signal to ensure that the second network device can accurately receive the preamble sent by the terminal.
As an optional embodiment, indicating, through the information included in the PDCCH order, the beam for the terminal to send the preamble includes one of the following (A), (B) and (C).

(A) Indicating that a beam for receiving an SSB included in the PDCCH order is used as the beam for the terminal to send the preamble, wherein the SSB is associated with a second network device.

In this embodiment, the first network device instructs the terminal to transmit a preamble by using a beam that is used to receive the SSB included in the PDCCH order. The PDCCH order signaling may indicate an index of SS or PBCH. The SSB included in the PDCCH order is associated with the second network device. When the terminal uses the beam that is used to receive the SSB as the beam for sending the preamble, the second network device can accurately receive the preamble.
The association between the SSB and the second network device is not described here.
(B) Setting a second codepoint in the PDCCH order, and indicating the beam for the terminal to send the preamble through the second codepoint.
In some embodiments, indicating the beam for the terminal to send the preamble through the second codepoint includes: indicating a TCI state through the second codepoint, wherein a beam for receiving a type-D source reference signal included in the TCI state corresponding to the second codepoint is used as the beam for the terminal to send the preamble.
The second codepoint may be the same as or different from the first codepoint.
In this embodiment, the first network device may add a second codepoint indicating the TCI state in the PDCCH order (DCI format 1_0), instructing the terminal to use the beam that is used to receive the type-D source RS (possibly SSB/CSI-RS) included in the TCI state corresponding to the second codepoint as the beam for sending the preamble. This ensures that the second network device accurately receives the preamble. The type-D source RS may be SSB or CSI-RS.
(C) Setting a second indicator field in the PDCCH order, and indicating the beam for the terminal to send the preamble through the second indicator field.
In some embodiments, indicating the beam for the terminal to send the preamble through the second indicator field includes: indicating a control resource set index of an active TCI state pool through the second indicator field, wherein a beam for receiving a type-D source reference signal included in a second TCI state is used as the beam for the terminal to send the preamble, and the second TCI state is a preset TCI state in the active TCI state pool corresponding to the control resource set index
The second indicator field may be the same as or different from the first indicator field, and the second TCI state may be the same as or different from the first TCI state.
In this embodiment, the first network device may add a CORESETPoolIndex for indicating the active TCI state pool into the PDCCH order (DCI format 1_0). The terminal uses the beam that is used to receive the type-D source RS (which may be SSB/CSI-RS) included in the second TCI state in the TCI state pool activated by the CORESETPoolIndex + MAC CE indicated by the first network device as the beam for sending the preamble, which can ensure that the second network device accurately receives the preamble. The second TCI state may be the TCI state with the lowest TCI state ID in the TCI state pool corresponding to the CORESETPoolIndex. It should be noted that the second TCI state may also be other TCI states in the TCI state pool, which can be selected as needed.

It should be noted that the first network device may instruct the terminal to determine the path loss reference signal for sending the preamble and the beam for sending the preamble separately according to the information included in the PDCCH order, or may instruct the terminal to determine the path loss reference signal and the beam for sending the preamble simultaneously according to the information included in the PDCCH order. In some embodiments, the manner in which the terminal determines the path loss reference signal for sending the preamble may be associated with the manner in which the terminal determines the beam for sending the preamble.

As an optional embodiment, the method further includes: sending a PDCCH for scheduling an RAR and the RAR to the terminal.

In this embodiment, if the TRP that sends the PDCCH order is the same as the TRP that sends the scheduled RAR, that is, the first network device sends a PDCCH order to the terminal, and the first network device sends an RAR to the terminal, the terminal can use the beam that is used to receive the PDCCH order to receive the PDCCH scheduling the RAR and the RAR. For example, assuming that the first network device is TRP1 and the second network device is TRP2, as shown in Fig. 2: TRP1 sends a PDCCH order to the terminal, and the terminal sends a preamble using the determined transmission power and beam; TRP2 receives the preamble; and TRP1 sends the PDCCH scheduling the RAR and the RAR to the terminal.

In some embodiments, the RAR includes timing advance group (TAG) identification information, where the TAG identification information is used for indicating a TAG corresponding to a timing advance (TA) included in the RAR. In this embodiment, after receiving the RAR, the terminal can obtain a TAG identification and a TA value by decoding the RAR. The TA value is the initial value for the terminal to adjust the TA, and the TAG is the TAG corresponding to the TA value. The terminal can determine the TAG corresponding to the TA value based on the TAG identification information, thereby determining which network device the TA value corresponds to, and use the TA value as the initial TA value for subsequent TA adjustment of the corresponding network device.

In the embodiment of the present disclosure, a network device sends a PDCCH order to a terminal, and the information included in the PDCCH order is used to indicate to the terminal a path loss reference signal and/or beam for sending a preamble, so that the terminal can determine the path loss reference signal and/or beam for sending the preamble according to the information in the PDCCH order, and can ensure that other network devices except the first network device can receive the preamble in a multi-TRP transmission scenario, thereby improving the accuracy for the TRP to estimate the initial TA in the multi-TRP transmission scenario.

The above embodiment introduces the preamble sending method disclosed in the present invention. The following embodiment will further illustrate the corresponding apparatus with reference to the accompanying drawings.

Specifically, as shown in Fig. 6, an embodiment of the present disclosure provides a preamble sending apparatus 600, which is applied to a terminal and includes:

a first receiving unit 610, configured to receive a physical downlink control channel (PDCCH) order sent by a first network device;
a first determining unit 620, configured to determine, according to information included in the PDCCH order, a path loss reference signal and/or a beam for sending a preamble; and
a first sending unit 630, configured to send the preamble according to the path loss reference signal and/or the beam.

In some embodiments, the path loss reference signal is not quasi-co-located with a reference signal used to receive the PDCCH order; and/or the beam is different from a beam used to receive the PDCCH order.

In some embodiments, the first determining unit is specifically configured to perform one of the following:

determining that a synchronization signal and PBCH block (SSB) included in the PDCCH order is used as the path loss reference signal for sending the preamble, the SSB being associated with the second network device; or
determining, according to a first codepoint included in the PDCCH order, the path loss reference signal for sending the preamble; or
determining, according to a first indicator field included in the PDCCH order, the path loss reference signal for sending the preamble.

In some embodiments, the first determining unit is specifically configured to:
determine that a type-D source reference signal included in a TCI state corresponding to the first codepoint is used as the path loss reference signal for sending the preamble.

In some embodiments, the first indicator field is used for indicating a control resource set (CORESET) index of an active TCI state pool, and the first determining unit is specifically configured to:
determine that a type-D source reference signal included in a first TCI state is used as the path loss reference signal for sending the preamble, wherein the first TCI state is a preset TCI state in the active TCI state pool corresponding to the control resource set index.

In some embodiments, the first determining unit is specifically configured to perform one of the following:

determining that a beam for receiving an SSB included in the PDCCH order is used as the beam for sending the preamble, wherein the SSB is associated with a second network device; or
determining, according to a second codepoint included in the PDCCH order, the beam for sending the preamble; or
determining, according to a second indicator field included in the PDCCH order, the beam for sending the preamble.

In some embodiments, the first determining unit is specifically configured to:
determine that a beam for receiving a type-D source reference signal included in the TCI state corresponding to the second codepoint is used as the beam for sending the preamble.

In some embodiments, the second indicator field is used for indicating the control resource set index of the active TCI state pool, and the first determination unit is specifically configured to: determine that a beam for receiving a type-D source reference signal included in a second TCI state is used as the beam for sending the preamble, wherein the second TCI state is a preset TCI state in the active TCI state pool corresponding to the control resource set index.

In some embodiments, the association between the SSB and the second network device includes at least one of the following:

a network device corresponding to an SSB group to which the SSB belongs is the second network device;
the SSB is an SSB in a type-D source reference signal included in a TCI state corresponding to the second network device among TCI states indicated by the first network device;
the SSB is an SSB used by a path loss reference signal in an uplink transmission corresponding to the second network device.

In some embodiments, the apparatus further includes:
a second receiving unit, configured to receive SSB group information sent by the first network device, wherein the SSB group information is used for indicating a network device corresponding to each SSB group, and each SSB group includes at least one SSB.

In some embodiments, the first sending unit is specifically configured to:

determining, according to the path loss reference signal, a path loss of sending the preamble;
calculating, according to the path loss, a transmission power for sending the preamble; and
sending the preamble by using the transmission power.

In some embodiments, the apparatus further includes a third receiving unit, wherein the third receiving unit is specifically configured to:

receiving, using a beam that is used to receive the PDCCH order, a PDCCH scheduling a random access response (RAR) and the RAR that are sent by the first network device;
or,
receiving, using a beam in a control resource set associated with a common search space (CSS) corresponding to a second network device, a PDCCH scheduling an RAR and the RAR that are sent by the second network device.

In some embodiments, the RAR includes TAG identification information, and the TAG identification information is used for indicating the TAG corresponding to the TA included in the RAR.

In some embodiments, the information included in the PDCCH order includes: first indication information, where the first indication information is used for indicating a candidate cell identifier.

It should be noted here that the above-mentioned apparatus provided in the embodiment of the present disclosure can implement all the method steps implemented in the above-mentioned method embodiment applied to the terminal, and can achieve the same technical effect. The parts and beneficial effects of this embodiment that are the same as the method embodiment will not be described in detail here.

Specifically, as shown in Fig. 7, an embodiment of the present disclosure provides a preamble sending apparatus 700, which is applied to a network device, including:

a second determining unit 710, configured to determine information included in a PDCCH order; and
an indicating unit 720, configured to send the PDCCH order to a terminal, and indicate, through the information included in the PDCCH order, a path loss reference signal and/or a beam for the terminal to send a preamble.

In some embodiments, the path loss reference signal is not quasi-co-located with a reference signal used by the terminal to receive the PDCCH order; and/or the beam is different from a beam used by the terminal to receive the PDCCH order.

In some embodiments, the indicating unit is specifically configured to perform one of the following:

indicating that a synchronization signal and PBCH block (SSB) included in the PDCCH order is used as the path loss reference signal for the terminal to send the preamble, wherein the SSB is associated with a second network device; or
setting a first codepoint in the PDCCH order, and indicating the path loss reference signal for the terminal to send the preamble through the first codepoint; or
setting a first indicator field in the PDCCH order, and indicating the path loss reference signal for the terminal to send the preamble through the first indicator field.

In some embodiments, the indicating unit is specifically configured to:
indicate a TCI state through the first codepoint, wherein a type-D source reference signal included in the TCI state corresponding to the first codepoint is used as the path loss reference signal for sending the preamble.

In some embodiments, the indicating unit is specifically configured to:
indicate a control resource set index of an active TCI state pool through the first indicator field, wherein a type-D source reference signal included in a first TCI state corresponding to the control resource set index is used as the path loss reference signal for the terminal to send the preamble, and the first TCI state is a preset TCI state in the active TCI state pool corresponding to the control resource set index.

In some embodiments, the indicating unit is specifically configured to perform one of the following:

indicating that a beam for receiving an SSB included in the PDCCH order is used as the beam for the terminal to send the preamble, wherein the SSB is associated with a second network device; or
setting a second codepoint in the PDCCH order, and indicating the beam for the terminal to send the preamble through the second codepoint; or
setting a second indicator field in the PDCCH order, and indicating the beam for the terminal to send the preamble through the second indicator field.

In some embodiments, the indicating unit is specifically configured to:
indicate a TCI state through the second codepoint, wherein a beam for receiving a type-D source reference signal included in the TCI state corresponding to the second codepoint is used as the beam for the terminal to send the preamble.

In some embodiments, the indicating unit is specifically configured to:
indicate a control resource set index of an active TCI state pool through the second indicator field, wherein a beam for receiving a type-D source reference signal included in a second TCI state is used as the beam for the terminal to send the preamble, and the second TCI state is a preset TCI state in the active TCI state pool corresponding to the control resource set index.

In some embodiments, the association between the SSB and the second network device includes at least one of the following:

a network device corresponding to an SSB group to which the SSB belongs is the second network device;
the SSB is an SSB in a type-D source reference signal included in a TCI state corresponding to the second network device among TCI states indicated by the first network device;
the SSB is an SSB used by a path loss reference signal in an uplink transmission corresponding to the second network device.

In some embodiments, the apparatus further includes:

a grouping unit, configured to group the SSBs according to the network device corresponding to each SSB and obtain SSB group information;
a second sending unit, configured to send the SSB group information to the terminal;
wherein each SSB group includes at least one SSB.

In some embodiments, the apparatus further includes:

a third sending unit, configured to send the PDCCH for scheduling the RAR and the RAR to the terminal.

In some embodiments, the RAR includes TAG identification information, and the TAG identification information is used for indicating the TAG corresponding to the TA included in the RAR.

In some embodiments, the information included in the PDCCH order includes: first indication information, where the first indication information is used for indicating a candidate cell identifier.

It should be noted here that the above-mentioned apparatus provided in the embodiment of the present disclosure can implement all the method steps implemented in the above-mentioned method embodiment applied to the network device, and can achieve the same technical effect. The parts and beneficial effects of this embodiment that are the same as the method embodiment will not be described in detail here.

It should be noted that the division of units in the embodiments of the present disclosure is schematic and is merely a logical functional division. In actual implementation, other division methods may be used. Furthermore, the functional units in the various embodiments of the present disclosure may be integrated into a single processing unit, or each unit may exist physically separately, or two or more units may be integrated into a single unit. The aforementioned integrated units may be implemented in the form of hardware or software functional units.

If the integrated unit is implemented in the form of a software functional unit and sold or used as an independent product, it can be stored in a processor-readable storage medium. Based on such an understanding, essential parts, or parts contributing to the related art, of the technical solution of the present disclosure may be implemented in a form of a software product. The computer software product is stored in a storage medium, including several instructions to enable a computer device (which can be a personal computer, server, or network device, etc.) or a processor to perform all or part of the steps of the method described in each embodiment of the present disclosure. The aforementioned storage medium includes media that can store program codes, such as: USB flash drive, mobile hard disk, read-only memory (ROM), random access memory (RAM), magnetic disk or optical disc.

As shown in Fig. 8, an embodiment of the present disclosure further provides a terminal, including: a memory 820, a transceiver 800, and a processor 810; wherein the memory 820 is configured to store a computer program; the transceiver 800 is configured to receive and send data under the control of the processor 810; and the processor 810 is configured to read the computer program in the memory and perform the following steps:

receiving a physical downlink control channel (PDCCH) order sent by a first network device;
determining, according to information included in the PDCCH order, a path loss reference signal and/or a beam for sending a preamble;
sending the preamble according to the path loss reference signal and/or the beam.

In some embodiments, the path loss reference signal is not quasi-co-located with a reference signal used to receive the PDCCH order; and/or the beam is different from a beam used to receive the PDCCH order.

In some embodiments, the processor is configured to read the computer program in the memory and perform one of the following steps:

determining that a synchronization signal and PBCH block (SSB) included in the PDCCH order is used as the path loss reference signal for sending the preamble, the SSB being associated with the second network device; or
determining, according to a first codepoint included in the PDCCH order, the path loss reference signal for sending the preamble; or
determining, according to a first indicator field included in the PDCCH order, the path loss reference signal for sending the preamble.

In some embodiments, the processor is configured to read the computer program in the memory and perform the following step:
determining that a type-D source reference signal included in a TCI state corresponding to the first codepoint is used as the path loss reference signal for sending the preamble.

In some embodiments, the first indicator field is used for indicating a control resource set (CORESET) index of an active TCI state pool, and the processor is configured to read a computer program in the memory and perform the following step:
determining that a type-D source reference signal included in a first TCI state is used as the path loss reference signal for sending the preamble, wherein the first TCI state is a preset TCI state in the active TCI state pool corresponding to the control resource set index.

In some embodiments, the processor is configured to read the computer program in the memory and perform one of the following steps:

determining that a beam for receiving an SSB included in the PDCCH order is used as the beam for sending the preamble, wherein the SSB is associated with a second network device; or
determining, according to a second codepoint included in the PDCCH order, the beam for sending the preamble; or
determining, according to a second indicator field included in the PDCCH order, the beam for sending the preamble.

In some embodiments, the processor is configured to read the computer program in the memory and perform the following step:
determining that a beam for receiving a type-D source reference signal included in the TCI state corresponding to the second codepoint is used as the beam for sending the preamble.

In some embodiments, the second indicator field is used for indicating a control resource set (CORESET) index of an active TCI state pool, and the processor is configured to read the computer program in the memory and perform the following step:
determining that a beam for receiving a type-D source reference signal included in a second TCI state is used as the beam for sending the preamble, wherein the second TCI state is a preset TCI state in the active TCI state pool corresponding to the control resource set index.

In some embodiments, the association between the SSB and the second network device includes at least one of the following:

a network device corresponding to an SSB group to which the SSB belongs is the second network device;
the SSB is an SSB in a type-D source reference signal included in a TCI state corresponding to the second network device among TCI states indicated by the first network device;
the SSB is an SSB used by a path loss reference signal in an uplink transmission corresponding to the second network device.

In some embodiments, the processor is configured to read the computer program in the memory and perform the following step:
receiving SSB group information sent by the first network device, wherein the SSB group information is used for indicating a network device corresponding to each SSB group, and each SSB group includes at least one SSB.

**In** some embodiments, the processor is configured to read the computer program in the memory and perform the following steps:

determining, according to the path loss reference signal, a path loss of sending the preamble;
calculating, according to the path loss, a transmission power for sending the preamble; and
sending the preamble by using the transmission power.

**In** some embodiments, the processor is configured to read the computer program in the memory and perform the following step:

receiving, using a beam that is used to receive the PDCCH order, a PDCCH scheduling a random access response (RAR) and the RAR that are sent by the first network device;
or,
receiving, using a beam in a control resource set associated with a common search space (CSS) corresponding to a second network device, a PDCCH scheduling an RAR and the RAR that are sent by the second network device.

**In** some embodiments, the RAR includes timing advance group (TAG) identification information, and the TAG identification information is used for indicating the TAG corresponding to the timing advance (TA) included in the RAR.

**In** some embodiments, the information included in the PDCCH order includes: first indication information, where the first indication information is used for indicating a candidate cell identifier.

**In** Fig. 8, the bus architecture may include any number of interconnected buses and bridges, to connect various circuits such as one or more processors specifically represented by processor 810 and a memory represented by memory 820. The bus architecture can also link various other circuits such as peripherals, regulators, and power management circuits together, which are all well known in the art and are therefore not further described herein. The bus interface provides an interface. The transceiver 800 can be a plurality of components, namely, a transmitter and a receiver, providing a unit for communicating with various other devices on a transmission medium. For different user equipment, the user interface 830 can also be an interface that can connect required devices externally or internally, and the connected devices include, but are not limited to: keypads, displays, speakers, microphones, joysticks, etc.

The processor 810 is responsible for managing the bus architecture and general processing, and the memory 820 can store data used by the processor 810 when performing operations.

In some embodiments, the processor 810 may be a central processing unit (CPU), an application specific integrated circuit (ASIC), a field programmable gate array (FPGA), or a complex programmable logic device (CPLD). The processor may also adopt a multi-core architecture.

The processor calls the computer program stored in the memory to execute any of the methods provided by the embodiments of the present disclosure according to the obtained executable instructions. The processor and the memory can also be arranged physically separately.

It should be noted here that the above-mentioned terminal provided in the embodiment of the present disclosure can implement all the method steps implemented in the above-mentioned method embodiment applied to the terminal, and can achieve the same technical effect. The parts and beneficial effects of this embodiment that are the same as the method embodiment will not be described in detail here.

As shown in Fig. 9, an embodiment of the present disclosure further provides a network device, including: a memory 920, a transceiver 900, and a processor 910; wherein the memory 920 is configured to store a computer program; the transceiver 900 is configured to receive and send data under the control of the processor 910; and the processor 910 is configured to read the computer program in the memory and perform the following steps:

determining information included in a PDCCH order;
sending the PDCCH order to a terminal, and indicating, through the information included in the PDCCH order, a path loss reference signal and/or a beam for the terminal to send a preamble.

In some embodiments, the path loss reference signal is not quasi-co-located with a reference signal used by the terminal to receive the PDCCH order; and/or the beam is different from a beam used by the terminal to receive the PDCCH order.

In some embodiments, the processor is configured to read the computer program in the memory and perform one of the following steps:

indicating that a synchronization signal and PBCH block (SSB) included in the PDCCH order is used as the path loss reference signal for the terminal to send the preamble, wherein the SSB is associated with a second network device; or
setting a first codepoint in the PDCCH order, and indicating the path loss reference signal for the terminal to send the preamble through the first codepoint; or
setting a first indicator field in the PDCCH order, and indicating the path loss reference signal for the terminal to send the preamble through the first indicator field.

In some embodiments, the processor is configured to read the computer program in the memory and perform the following step:
indicating a TCI state through the first codepoint, wherein a type-D source reference signal included in the TCI state corresponding to the first codepoint is used as the path loss reference signal for sending the preamble.

In some embodiments, the processor is configured to read the computer program in the memory and perform the following step:
indicating a control resource set index of an active TCI state pool through the first indicator field, wherein a type-D source reference signal included in a first TCI state corresponding to the control resource set index is used as the path loss reference signal for the terminal to send the preamble, and the first TCI state is a preset TCI state in the active TCI state pool corresponding to the control resource set index.

In some embodiments, the processor is configured to read the computer program in the memory and perform one of the following steps:

indicating that a beam for receiving an SSB included in the PDCCH order is used as the beam for the terminal to send the preamble, wherein the SSB is associated with a second network device; or
setting a second codepoint in the PDCCH order, and indicating the beam for the terminal to send the preamble through the second codepoint; or
setting a second indicator field in the PDCCH order, and indicating the beam for the terminal to send the preamble through the second indicator field.

In some embodiments, the processor is configured to read the computer program in the memory and perform the following step:
indicating a TCI state through the second codepoint, wherein a beam for receiving a type-D source reference signal included in the TCI state corresponding to the second codepoint is used as the beam for the terminal to send the preamble.

In some embodiments, the processor is configured to read the computer program in the memory and perform the following step:
indicating a control resource set index of an active TCI state pool through the second indicator field, wherein a beam for receiving a type-D source reference signal included in a second TCI state is used as the beam for the terminal to send the preamble, and the second TCI state is a preset TCI state in the active TCI state pool corresponding to the control resource set index.

In some embodiments, the association between the SSB and the second network device includes at least one of the following:

a network device corresponding to an SSB group to which the SSB belongs is the second network device;
the SSB is an SSB in a type-D source reference signal included in a TCI state corresponding to the second network device among TCI states indicated by the first network device; or
the SSB is an SSB used by a path loss reference signal in an uplink transmission corresponding to the second network device.

In some embodiments, the processor is configured to read the computer program in the memory and perform the following steps:

grouping the SSBs according to the network device corresponding to each SSB to obtain SSB group information;
sending the SSB group information to the terminal;
wherein each SSB group includes at least one SSB.

In some embodiments, the processor is configured to read the computer program in the memory and perform the following step:
sending, to the terminal, a PDCCH for scheduling an RAR and the RAR.

In some embodiments, the RAR includes TAG identification information, and the TAG identification information is used for indicating the TAG corresponding to the TA included in the RAR.

In some embodiments, the information included in the PDCCH order includes: first indication information, where the first indication information is used for indicating a candidate cell identifier.

In Fig. 9, the bus architecture may include any number of interconnected buses and bridges, to connect various circuits such as one or more processors specifically represented by processor 910 and a memory represented by memory 920. The bus architecture can also link various other circuits such as peripherals, regulators, and power management circuits together, which are all well known in the art and are therefore not further described herein. The bus interface provides an interface. The transceiver 900 can be a plurality of components, namely, a transmitter and a receiver, providing a unit for communicating with various other devices on a transmission medium. The processor 910 is responsible for managing the bus architecture and general processing, and the memory 920 can store data used by the processor 910 when performing operations.

The processor 910 may be a central processing unit (CPU), an application specific integrated circuit (ASIC), a field programmable gate array (FPGA), or a complex programmable logic device (CPLD). The processor may also adopt a multicore architecture.

It should be noted here that the above-mentioned network device provided in the embodiment of the present disclosure can implement all the method steps implemented in the above-mentioned method embodiment applied to the network device, and can achieve the same technical effect. The parts and beneficial effects of this embodiment that are the same as the method embodiment will not be described in detail here.

In addition, a specific embodiment of the present disclosure further provides a processor-readable storage medium having a computer program stored thereon, wherein, when executed by a processor, the program implements the steps of the above-described preamble sending method and can achieve the same technical effect. To avoid repetition, the details are not described here. The readable storage medium can be any available medium or data storage device accessible by the processor, including but not limited to magnetic storage (such as a floppy disk, hard disk, magnetic tape, magneto-optical disk (MO)), optical storage (such as CD, DVD, BD, HVD), and semiconductor storage (such as ROM, EPROM, EEPROM, non-volatile memory (NAND FLASH), solid-state drive (SSD)).

It should be noted that the technical solutions provided by the embodiments of the present disclosure can be applied to a variety of systems, particularly the fifth generation mobile communication technology (5G) system. For example, applicable systems may include the global system of mobile communication (GSM) system, the code division multiple access (CDMA) system, the wideband code division multiple access (WCDMA) general packet radio service (GPRS) system, the long term evolution (LTE) system, the LTE frequency division duplex (FDD) system, the LTE time division duplex (TDD) system, the long term evolution advanced (LTE-A) system, the universal mobile telecommunication system (UMTS), the world-wide interoperability for microwave access (WiMAX) system, and the 5G New Radio (NR) system. These various systems all include terminal devices and network devices. The system may also include core network parts, such as the Evolved Packet System (EPS) and the 5G system (5GS).

The terminal device described with respect to the embodiments of the present disclosure may refer to a device that provides voice and/or data connectivity to users, handheld device with wireless connectivity, or other processing device connected to a wireless modem. The names of terminal devices may vary in different systems. For example, in 5G systems, the terminal device may be referred to as user equipment (UE). A wireless terminal device can communicate with one or more core networks (CNs) via a radio access network (RAN). The wireless terminal device can be a mobile terminal device, such as mobile phone (also known as "cellular" phone), and computer with mobile terminal device, for example, portable, pocket-sized, handheld, built-in, or in-vehicle mobile device that exchanges voice and/or data with a radio access network. Examples include Personal Communication Service (PCS) phones, cordless phones, Session Initiated Protocol (SIP) phones, Wireless Local Loop (WLL) stations, and Personal Digital Assistants (PDAs). The wireless terminal device may also be referred to as a system, a subscriber unit, a subscriber station, a mobile station, a mobile, a remote station, an access point, a remote terminal, an access terminal, a user terminal, a user agent, or a user device, but is not limited in the embodiments of the present disclosure.

The network device described with respect to the embodiments of the present disclosure may be a base station, which may include multiple cells providing services to terminals. Depending on the specific application scenario, a base station may also be referred to as an access point, or may be a device in an access network that communicates with a wireless terminal device via one or more sectors over the air interface, or may be referred to by other names. The network device may be used to convert received air frames into Internet Protocol (IP) packets, or vice versa, acting as a router between the wireless terminal device and the rest of the access network, which may include an Internet Protocol (IP) communication network. The network device may also coordinate attribute management of the air interface. For example, the network device involved in the embodiments of the present disclosure may be a base transceiver station (BTS) in the Global System for Mobile communications (GSM) or Code Division Multiple Access (CDMA), NodeB in Wide-band Code Division Multiple Access (WCDMA), evolutionary NodeB (eNB or e-NodeB) in the Long Term Evolution (LTE) system, 5G base station (gNB) in the next generation 5G network architecture, home evolved NodeB (HeNB), relay node, femto, pico, etc., and are not limited in the embodiments of the present disclosure. In some network structures, the network devices may include a centralized unit (CU) node and a distributed unit (DU) node, and the centralized unit and the distributed unit may also be geographically separated.

The Network device and terminal device can each use one or more antennas for Multiple Input Multiple Output (MIMO) transmission therebetween. MIMO transmission can be either Single User MIMO (SU-MIMO) or Multiple User MIMO (MU-MIMO). Depending on the configuration and number of antennas, MIMO transmission can be two-dimensional MIMO (2D-MIMO), three-dimensional MIMO (3D-MIMO), full-dimensional MIMO (FD-MIMO), or massive MIMO. It can also employ diversity transmission, precoded transmission, beamformed transmission or the like.

Those skilled in the art will appreciate that embodiments of the present disclosure may be provided as methods, systems, or computer program products. Thus, the present disclosure may take the form of an entirely hardware embodiment, an entirely software embodiment, or an embodiment combining software and hardware. Furthermore, the present disclosure may take the form of a computer program product implemented on one or more computer-usable storage media (including but not limited to magnetic disk storage and optical storage) containing computer-usable program code.

The present disclosure is described with reference to flowcharts and/or block diagrams of methods, devices (systems), and computer program products according to embodiments of the present disclosure. It should be understood that each process and/or block in the flowcharts and/or block diagrams, as well as combinations of processes and/or blocks in the flowcharts and/or block diagrams, can be implemented by computer-executable instructions. These computer-executable instructions can be provided to a processor of a general-purpose computer, a special-purpose computer, an embedded processor, or other programmable data processing device to produce a machine, such that the instructions executed by the processor of the computer or other programmable data processing device produce a device for implementing the functions specified in one or more processes in the flowcharts and/or one or more blocks in the block diagrams.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

It should be noted that it should be understood that the division of the above modules is merely a division of logical functions. In actual implementation, they can be fully or partially integrated into one physical entity, or they can be physically separated. Moreover, these modules can all be implemented in the form of software called by a processing element; or they can all be implemented in the form of hardware; or some modules can be implemented in the form of software called by a processing element, and some modules can be implemented in the form of hardware. For example, a module can be a separately established processing element, or it can be integrated into a chip of the above-mentioned device. In addition, it can also be stored in the memory of the above-mentioned device in the form of program code, and called by a processing element of the above-mentioned device to perform the functions of the above-mentioned module. The implementation of other modules is similar. In addition, these modules can all or partly be integrated together, or they can be implemented independently. The processing element described here can be an integrated circuit with signal processing capabilities. During implementation, each step of the above method or each module above can be completed by an integrated logic circuit of hardware in the processor element or instructions in the form of software.

For example, each module, unit, sub-unit, or sub-module may be one or more integrated circuits configured to implement the above method, such as one or more application-specific integrated circuits (ASICs), one or more digital signal processors (DSPs), or one or more field programmable gate arrays (FPGAs). For another example, when a module is implemented by scheduling program code on a processing element, the processing element may be a general-purpose processor, such as a central processing unit (CPU) or other processor capable of calling program code. For another example, these modules may be integrated together and implemented in the form of a system-on-a-chip (SOC).

The terms "first", "second" and the like in the specification and claims of the present disclosure are used to distinguish similar objects and are not necessarily used to describe a specific order or precedence. It should be understood that the terms used in this manner are interchangeable where appropriate, so that the embodiments of the present disclosure described herein may be implemented in a sequence other than that illustrated or described herein. In addition, the terms "including" and "having" and any variations thereof, are intended to cover non-exclusive inclusions. For example, a process, method, system, product, or device that includes a series of steps or units need not be limited to those steps or units explicitly listed, but may include other steps or units that are not explicitly listed or that are inherent to these processes, methods, products, or devices. In addition, the use of "and/or" in the specification and claims to indicate at least one of the connected objects, for example, A and/or B and/or C means that seven situations are included: A alone, B alone, C alone, both A and B present, both B and C present, both A and C present, and all A, B, and C present. Similarly, the use of "at least one of A or B" in the specification and claims should be understood to mean "A alone, B alone, or both A and B present."

Obviously, those skilled in the art may make various changes and modifications to the present disclosure without departing from the spirit and scope of the present disclosure. Thus, if these modifications and variations of the present disclosure fall within the scope of the claims of the present disclosure and their equivalents, the present disclosure is intended to include these modifications and variations.

## Claims

**1.** A preamble sending method, comprising:

receiving, by a terminal, a physical downlink control channel (PDCCH) order sent by a first network device;
determining, by the terminal, according to information comprised in the PDCCH order, a path loss reference signal and/or a beam for sending a preamble; and
sending, by the terminal, the preamble according to the path loss reference signal and/or the beam.

**2.** The method according to claim 1, wherein the path loss reference signal is not quasi-co-located with a reference signal used to receive the PDCCH order; and/or the beam is different from a beam used to receive the PDCCH order.

**3.** The method according to claim 1, wherein the determining, according to the information comprised in the PDCCH order, the path loss reference signal for sending the preamble comprises one of the following:

determining that a synchronization signal and PBCH block (SSB) comprised in the PDCCH order is used as the path loss reference signal for sending the preamble, the SSB being associated with the second network device; or
determining, according to a first codepoint comprised in the PDCCH order, the path loss reference signal for sending the preamble; or
determining, according to a first indicator field comprised in the PDCCH order, the path loss reference signal for sending the preamble.

**4.** The method according to claim 3, wherein the determining, according to the first codepoint comprised in the PDCCH order, the path loss reference signal for sending the preamble comprises:
determining that a type-D source reference signal comprised in a transmission configuration indicator (TCI) state corresponding to the first codepoint is used as the path loss reference signal for sending the preamble.

**5.** The method according to claim 3, wherein the first indicator field is used for indicating a control resource set (CORESET) index of an active TCI state pool, and the determining, according to the first indicator field comprised in the PDCCH order, the path loss reference signal for sending the preamble comprises:
determining that a type-D source reference signal comprised in a first TCI state is used as the path loss reference signal for sending the preamble, wherein the first TCI state is a preset TCI state in the active TCI state pool corresponding to the control resource set index.

**6.** The method according to claim 1 or 3, wherein the determining, according to the information comprised in the PDCCH order, the beam for sending the preamble comprises one of the following:

determining that a beam for receiving an SSB comprised in the PDCCH order is used as the beam for sending the preamble, wherein the SSB is associated with a second network device; or
determining, according to a second codepoint comprised in the PDCCH order, the beam for sending the preamble; or
determining, according to a second indicator field comprised in the PDCCH order, the beam for sending the preamble.

**7.** The method according to claim 6, wherein the determining, according to the second codepoint comprised in the PDCCH order, the beam for sending the preamble comprises:
determining that a beam for receiving a type-D source reference signal comprised in the TCI state corresponding to the second codepoint is used as the beam for sending the preamble.

**8.** The method according to claim 6, wherein the second indicator field is used for indicating a control resource set (CORESET) index of an active TCI state pool, and the determining, according to the second indicator field comprised in the PDCCH order, the beam for sending the preamble comprises:
determining that a beam for receiving a type-D source reference signal comprised in a second TCI state is used as the beam for sending the preamble, wherein the second TCI state is a preset TCI state in the active TCI state pool corresponding to the control resource set index.

**9.** The method according to claim 3 or 6, wherein the association between the SSB and the second network device comprises at least one of the following:

a network device corresponding to an SSB group to which the SSB belongs is the second network device;
the SSB is an SSB in a type-D source reference signal comprised in a TCI state corresponding to the second network device among TCI states indicated by the first network device; or
the SSB is an SSB used by a path loss reference signal in an uplink transmission corresponding to the second network device.

**10.** The method according to claim 9, further comprising:
receiving SSB group information sent by the first network device, wherein the SSB group information is used for indicating a network device corresponding to each SSB group, and each SSB group comprises at least one SSB.

**11.** The method according to claim 1, wherein the sending, by the terminal, the preamble according to the path loss reference signal comprises:

determining, according to the path loss reference signal, a path loss of sending the preamble;
calculating, according to the path loss, a transmission power for sending the preamble; and
sending the preamble by using the transmission power.

**12.** The method according to claim 1, further comprising:

receiving, using a beam that is used to receive the PDCCH order, a PDCCH scheduling a random access response (RAR) and the RAR that are sent by the first network device;
or,
receiving, using a beam in a control resource set associated with a common search space (CSS) corresponding to a second network device, a PDCCH scheduling an RAR and the RAR that are sent by the second network device.

**13.** The method according to claim 12, wherein the RAR comprises timing advance group (TAG) identification information, and the TAG identification information is used for indicating a TAG corresponding to a timing advance (TA) comprised in the RAR.

**14.** The method according to claim 1, wherein the information comprised in the PDCCH order comprises: first indication information, wherein the first indication information is used for indicating a candidate cell identifier.

**15.** A preamble sending method, comprising:

determining, by a first network device, information comprised in a PDCCH order; and
sending, by the first network device, the PDCCH order to a terminal, and indicating, through the information comprised in the PDCCH order, a path loss reference signal and/or a beam for the terminal to send a preamble.

**16.** The method according to claim 15, wherein the path loss reference signal is not quasi-co-located with a reference signal used by the terminal to receive the PDCCH order; and/or the beam is different from a beam used by the terminal to receive the PDCCH order.

**17.** The method according to claim 15, wherein the indicating, through the information comprised in the PDCCH order, the path loss reference signal for the terminal to send the preamble comprises one of the following:

indicating that a synchronization signal and PBCH block (SSB) comprised in the PDCCH order is used as the path loss reference signal for the terminal to send the preamble, wherein the SSB is associated with a second network device; or
setting a first codepoint in the PDCCH order, and indicating the path loss reference signal for the terminal to send the preamble through the first codepoint; or
setting a first indicator field in the PDCCH order, and indicating the path loss reference signal for the terminal to send the preamble through the first indicator field.

**18.** The method according to claim 17, wherein the indicating the path loss reference signal for the terminal to send the preamble through the first codepoint comprises:
indicating a TCI state through the first codepoint, wherein a type-D source reference signal comprised in the TCI state corresponding to the first codepoint is used as the path loss reference signal for sending the preamble.

**19.** The method according to claim 17, wherein the indicating the path loss reference signal for the terminal to send the preamble through the first indicator field comprises:
indicating a control resource set index of an active TCI state pool through the first indicator field, wherein a type-D source reference signal comprised in a first TCI state corresponding to the control resource set index is used as the path loss reference signal for the terminal to send the preamble, and the first TCI state is a preset TCI state in the active TCI state pool corresponding to the control resource set index.

**20.** The method according to claim 15 or 17, wherein the indicating, through the information comprised in the PDCCH order, the beam for the terminal to send the preamble comprises one of the following:

indicating that a beam for receiving an SSB comprised in the PDCCH order is used as the beam for the terminal to send the preamble, wherein the SSB is associated with a second network device; or
setting a second codepoint in the PDCCH order, and indicating the beam for the terminal to send the preamble through the second codepoint; or
setting a second indicator field in the PDCCH order, and indicating the beam for the terminal to send the preamble through the second indicator field.

**21.** The method according to claim 20, wherein the indicating the beam for the terminal to send the preamble through the second codepoint comprises:
indicating a TCI state through the second codepoint, wherein a beam for receiving a type-D source reference signal comprised in the TCI state corresponding to the second codepoint is used as the beam for the terminal to send the preamble.

**22.** The method according to claim 20, wherein the indicating the beam for the terminal to send the preamble through the second indicator field comprises:
indicating a control resource set index of an active TCI state pool through the second indicator field, wherein a beam for receiving a type-D source reference signal comprised in a second TCI state is used as the beam for the terminal to send the preamble, and the second TCI state is a preset TCI state in the active TCI state pool corresponding to the control resource set index.

**23.** The method according to claim 17 or 20, wherein the association between the SSB and the second network device comprises at least one of the following:

a network device corresponding to an SSB group to which the SSB belongs is the second network device;
the SSB is an SSB in a type-D source reference signal comprised in a TCI state corresponding to the second network device among TCI states indicated by the first network device; or
the SSB is an SSB used by a path loss reference signal in an uplink transmission corresponding to the second network device.

**24.** The method according to claim 23, further comprising:

grouping the SSBs according to the network device corresponding to each SSB to obtain SSB group information; and
sending the SSB group information to the terminal;
wherein each SSB group comprises at least one SSB.

**25.** The method according to claim 15, further comprising:
sending, to the terminal, a PDCCH for scheduling an RAR and the RAR.

**26.** The method according to claim 25, wherein the RAR comprises TAG identification information, and the TAG identification information is used for indicating a TAG corresponding to a TA comprised in the RAR.

**27.** The method according to claim 15, wherein the information comprised in the PDCCH order comprises: first indication information, wherein the first indication information is used for indicating a candidate cell identifier.

**28.** A terminal comprising: a memory, a transceiver, and a processor;
wherein the memory is configured to store a computer program; the transceiver is configured to receive and send data under the control of the processor; and the processor is configured to read the computer program in the memory and perform the following steps:

receiving a physical downlink control channel (PDCCH) order sent by a first network device;
determining, according to information comprised in the PDCCH order, a path loss reference signal and/or a beam for sending a preamble; and
sending the preamble according to the path loss reference signal and/or the beam.

**29.** The terminal according to claim 28, wherein the processor is configured to read the computer program in the memory and perform one of the following steps:

determining that a synchronization signal and PBCH block (SSB) comprised in the PDCCH order is used as the path loss reference signal for sending the preamble, the SSB being associated with the second network device; or
determining, according to a first codepoint comprised in the PDCCH order, the path loss reference signal for sending the preamble; or
determining, according to a first indicator field comprised in the PDCCH order, the path loss reference signal for sending the preamble.

**30.** The terminal according to claim 29, wherein the processor is configured to read the computer program in the memory and perform the following step:
determining that a type-D source reference signal comprised in a TCI state corresponding to the first codepoint is used as the path loss reference signal for sending the preamble.

**31.** The terminal according to claim 29, wherein the first indicator field is used for indicating a control resource set (CORESET) index of an active TCI state pool, and the processor is configured to read the computer program in the memory and perform the following step:
determining that a type-D source reference signal comprised in a first TCI state is used as the path loss reference signal for sending the preamble, wherein the first TCI state is a preset TCI state in the active TCI state pool corresponding to the control resource set index.

**32.** The terminal according to claim 28 or 29, wherein the processor is configured to read the computer program in the memory and perform one of the following steps:

determining that a beam for receiving an SSB comprised in the PDCCH order is used as the beam for sending the preamble, wherein the SSB is associated with a second network device; or
determining, according to a second codepoint comprised in the PDCCH order, the beam for sending the preamble; or
determining, according to a second indicator field comprised in the PDCCH order, the beam for sending the preamble.

**33.** The terminal according to claim 32, wherein the processor is configured to read the computer program in the memory and perform the following step:
determining that a beam for receiving a type-D source reference signal comprised in the TCI state corresponding to the second codepoint is used as the beam for sending the preamble.

**34.** The terminal according to claim 32, wherein the second indicator field is used for indicating a control resource set (CORESET) index of an active TCI state pool, and the processor is configured to read the computer program in the memory and perform the following step:
determining that a beam for receiving a type-D source reference signal comprised in a second TCI state is used as the beam for sending the preamble, wherein the second TCI state is a preset TCI state in the active TCI state pool corresponding to the control resource set index.

**35.** The terminal according to claim 28, wherein the information comprised in the PDCCH order comprises: first indication information, wherein the first indication information is used for indicating a candidate cell identifier.

**36.** A network device comprising: a memory, a transceiver, and a processor; wherein the memory is configured to store a computer program; the transceiver is configured to receive and send data under the control of the processor; and the processor is configured to read the computer program in the memory and perform the following steps:

determining information comprised in a PDCCH order; and
sending the PDCCH order to a terminal, and indicating, through the information comprised in the PDCCH order, a path loss reference signal and/or a beam for the terminal to send a preamble.

**37.** The network device according to claim 36, wherein the processor is configured to read the computer program in the memory and perform one of the following steps:

indicating that a synchronization signal and PBCH block (SSB) comprised in the PDCCH order is used as the path loss reference signal for the terminal to send the preamble, wherein the SSB is associated with a second network device; or
setting a first codepoint in the PDCCH order, and indicating the path loss reference signal for the terminal to send the preamble through the first codepoint; or
setting a first indicator field in the PDCCH order, and indicating the path loss reference signal for the terminal to send the preamble through the first indicator field.

**38.** The network device according to claim 37, wherein the processor is configured to read the computer program in the memory and perform the following step:
indicating a TCI state through the first codepoint, wherein a type-D source reference signal comprised in the TCI state corresponding to the first codepoint is used as the path loss reference signal for sending the preamble.

**39.** The network device according to claim 37, wherein the processor is configured to read the computer program in the memory and perform the following step:
indicating a control resource set index of an active TCI state pool through the first indicator field, wherein a type-D source reference signal comprised in a first TCI state corresponding to the control resource set index is used as the path loss reference signal for the terminal to send the preamble, and the first TCI state is a preset TCI state in the active TCI state pool corresponding to the control resource set index.

**40.** The network device according to claim 36 or 37, wherein the processor is configured to read the computer program in the memory and perform one of the following steps:

indicating that a beam for receiving an SSB comprised in the PDCCH order is used as the beam for the terminal to send the preamble, wherein the SSB is associated with a second network device; or
setting a second codepoint in the PDCCH order, and indicating the beam for the terminal to send the preamble through the second codepoint; or
setting a second indicator field in the PDCCH order, and indicating the beam for the terminal to send the preamble through the second indicator field.

**41.** The network device according to claim 40, wherein the processor is configured to read the computer program in the memory and perform the following step:
indicating a TCI state through the second codepoint, wherein a beam for receiving a type-D source reference signal comprised in the TCI state corresponding to the second codepoint is used as the beam for the terminal to send the preamble.

**42.** The network device according to claim 40, wherein the processor is configured to read the computer program in the memory and perform the following step:
indicating a control resource set index of an active TCI state pool through the second indicator field, wherein a beam for receiving a type-D source reference signal comprised in a second TCI state is used as the beam for the terminal to send the preamble, and the second TCI state is a preset TCI state in the active TCI state pool corresponding to the control resource set index.

**43.** The network device according to claim 36, wherein the information comprised in the PDCCH order comprises: first indication information, wherein the first indication information is used for indicating a candidate cell identifier.

**44.** A preamble sending apparatus, comprising:

a first receiving unit, configured to receive a physical downlink control channel (PDCCH) order sent by a first network device;
a first determining unit, configured to determine, according to information comprised in the PDCCH order, a path loss reference signal and/or a beam for sending a preamble; and
a first sending unit, configured to send the preamble according to the path loss reference signal and/or the beam.

**45.** The apparatus according to claim 44, wherein the first determining unit is specifically configured to perform one of the following:

determining that a synchronization signal and PBCH block (SSB) comprised in the PDCCH order is used as the path loss reference signal for sending the preamble, the SSB being associated with the second network device; or
determining, according to a first codepoint comprised in the PDCCH order, the path loss reference signal for sending the preamble; or
determining, according to a first indicator field comprised in the PDCCH order, the path loss reference signal for sending the preamble.

**46.** The apparatus according to claim 45, wherein the first determining unit is specifically configured to:
determine that a type-D source reference signal comprised in a TCI state corresponding to the first codepoint is used as the path loss reference signal for sending the preamble.

**47.** The apparatus according to claim 45, wherein the first indicator field is used for indicating a control resource set (CORESET) index of an active TCI state pool, and the first determining unit is specifically configured to:
determine that a type-D source reference signal comprised in a first TCI state is used as the path loss reference signal for sending the preamble, wherein the first TCI state is a preset TCI state in the active TCI state pool corresponding to the control resource set index.

**48.** The apparatus according to claim 44 or 45, wherein the first determining unit is specifically configured to perform one of the following:

determining that a beam for receiving an SSB comprised in the PDCCH order is used as the beam for sending the preamble, wherein the SSB is associated with a second network device; or
determining, according to a second codepoint comprised in the PDCCH order, the beam for sending the preamble; or
determining, according to a second indicator field comprised in the PDCCH order, the beam for sending the preamble.

**49.** The apparatus according to claim 48, wherein the first determining unit is specifically configured to:
determine that a beam for receiving a type-D source reference signal comprised in the TCI state corresponding to the second codepoint is used as the beam for sending the preamble.

**50.** The apparatus according to claim 48, wherein the second indicator field is used for indicating a control resource set (CORESET) index of an active TCI state pool, and the first determining unit is specifically configured to:
determine that a beam for receiving a type-D source reference signal comprised in a second TCI state is used as the beam for sending the preamble, wherein the second TCI state is a preset TCI state in the active TCI state pool corresponding to the control resource set index.

**51.** The apparatus according to claim 44, wherein the information comprised in the PDCCH order comprises: first indication information, wherein the first indication information is used for indicating a candidate cell identifier.

**52.** A preamble sending apparatus, comprising:

a second determining unit, configured to determine information comprised in a PDCCH order; and
an indicating unit, configured to send the PDCCH order to a terminal, and indicate, through the information comprised in the PDCCH order, a path loss reference signal and/or a beam for the terminal to send a preamble.

**53.** The apparatus according to claim 52, wherein the indicating unit is specifically configured to perform one of the following:

indicating that a synchronization signal and PBCH block (SSB) comprised in the PDCCH order is used as the path loss reference signal for the terminal to send the preamble, the SSB being associated with the second network device; or
setting a first codepoint in the PDCCH order, and indicating the path loss reference signal for the terminal to send the preamble through the first codepoint; or
setting a first indicator field in the PDCCH order, and indicating the path loss reference signal for the terminal to send the preamble through the first indicator field.

**54.** The apparatus according to claim 53, wherein the indicating unit is specifically configured to:
indicate a TCI state through the first codepoint, wherein a type-D source reference signal comprised in the TCI state corresponding to the first codepoint is used as the path loss reference signal for sending the preamble.

**55.** The apparatus according to claim 53, wherein the indicating unit is specifically configured to:
indicate a control resource set index of an active TCI state pool through the first indicator field, wherein a type-D source reference signal comprised in a first TCI state corresponding to the control resource set index is used as the path loss reference signal for the terminal to send the preamble, and the first TCI state is a preset TCI state in the active TCI state pool corresponding to the control resource set index.

**56.** The apparatus according to claim 52 or 53, wherein the indicating unit is specifically configured to perform one of the following:

indicating that a beam for receiving an SSB comprised in the PDCCH order is used as the beam for the terminal to send the preamble, wherein the SSB is associated with a second network device; or
setting a second codepoint in the PDCCH order, and indicating the beam for the terminal to send the preamble through the second codepoint; or
setting a second indicator field in the PDCCH order, and indicating the beam for the terminal to send the preamble through the second indicator field.

**57.** The apparatus according to claim 56, wherein the indicating unit is specifically configured to:
indicate a TCI state through the second codepoint, wherein a beam for receiving a type-D source reference signal comprised in the TCI state corresponding to the second codepoint is used as the beam for the terminal to send the preamble.

**58.** The apparatus according to claim 56, wherein the indicating unit is specifically configured to:
indicate a control resource set index of an active TCI state pool through the second indicator field, wherein a beam for receiving a type-D source reference signal comprised in a second TCI state is used as the beam for the terminal to send the preamble, and the second TCI state is a preset TCI state in the active TCI state pool corresponding to the control resource set index.

**59.** The apparatus according to claim 52, wherein the information comprised in the PDCCH order comprises: first indication information, wherein the first indication information is used for indicating a candidate cell identifier.

**60.** A processor-readable storage medium having a computer program stored thereon, wherein when the computer program is executed by a processor, the steps of the preamble sending method according to any one of claims 1 to 14 are implemented.

**61.** A processor-readable storage medium having a computer program stored thereon, wherein when the computer program is executed by a processor, the steps of the preamble sending method according to any one of claims 15 to 27 are implemented.

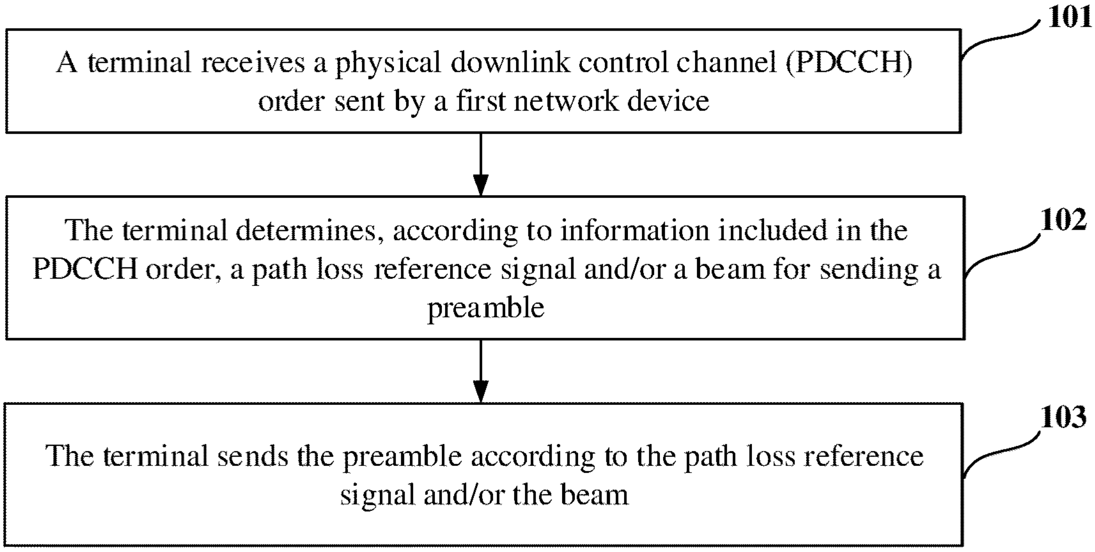


Fig. 1

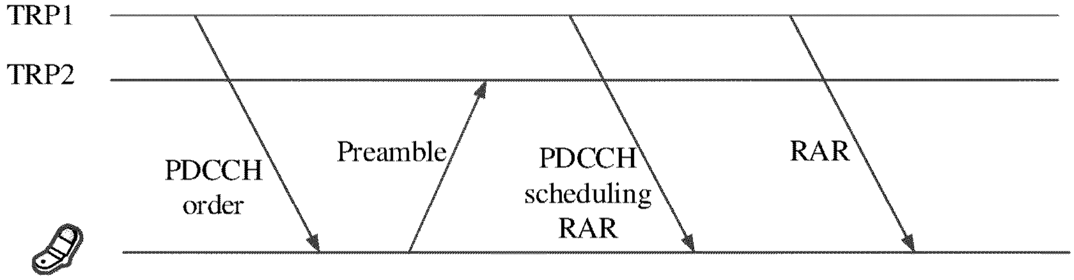


Fig. 2

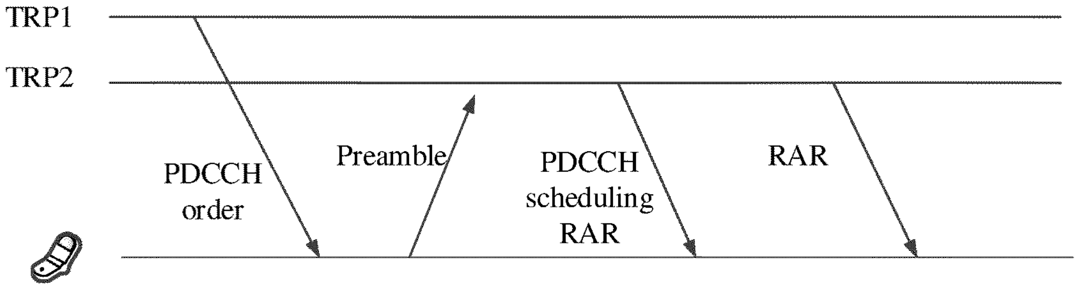


Fig. 3

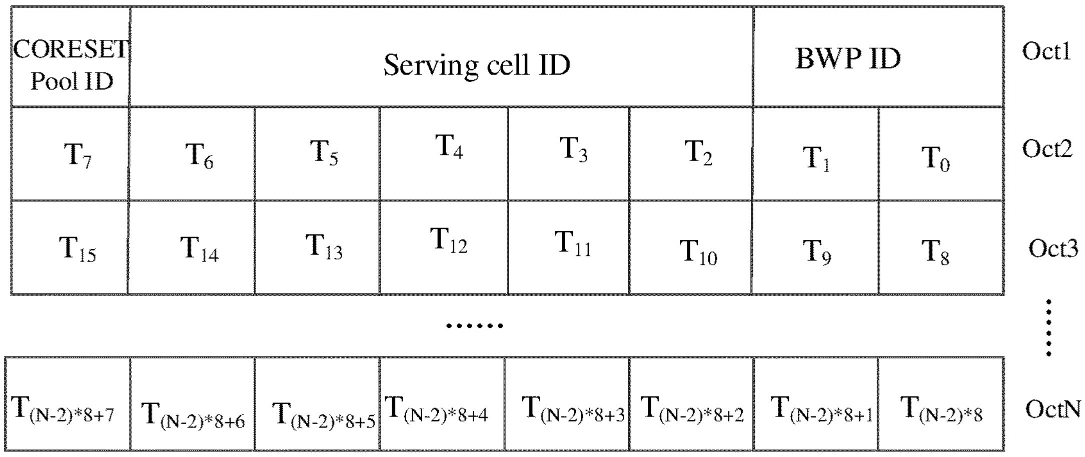


Fig. 4

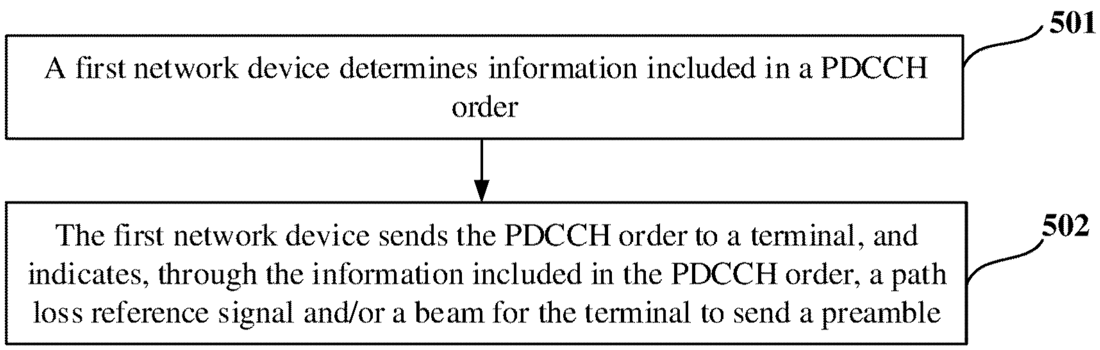


Fig. 5

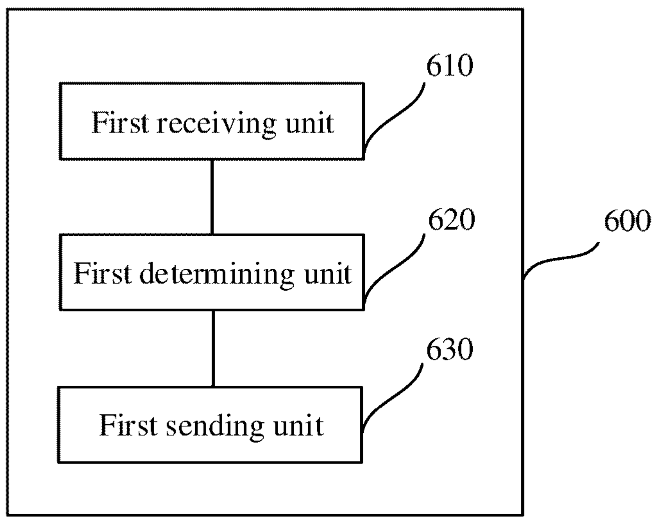


Fig. 6

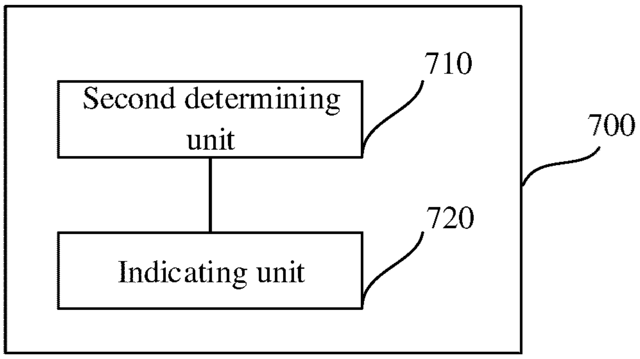


Fig. 7

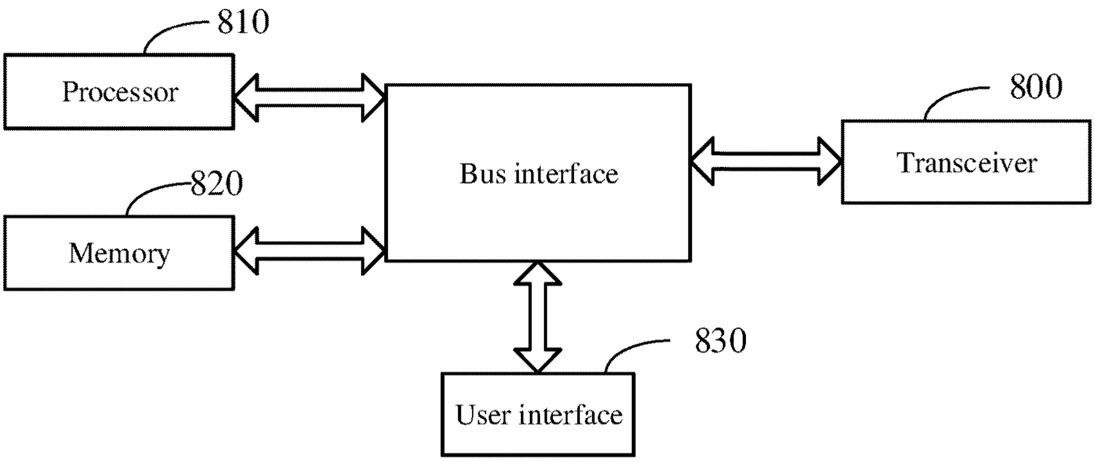


Fig. 8

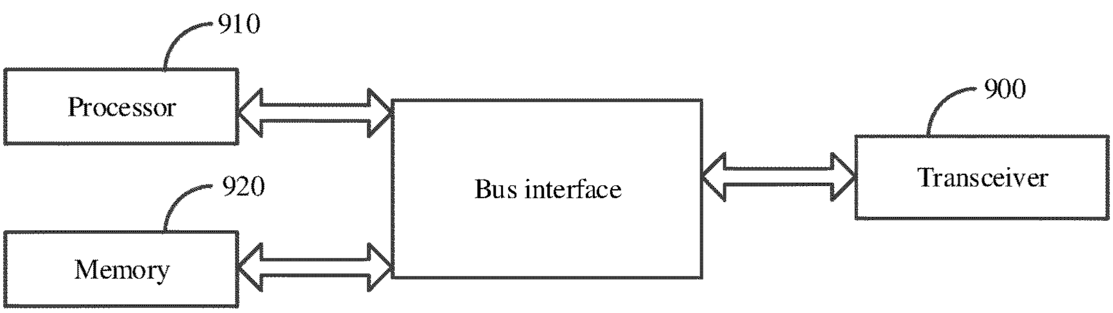


Fig. 9

## INTERNATIONAL SEARCH REPORT

International application No.
**PCT/CN2024/080235**

**A. CLASSIFICATION OF SUBJECT MATTER**

H04W 74/08(2024.01)i

According to International Patent Classification (IPC) or to both national classification and IPC

**B. FIELDS SEARCHED**

Minimum documentation searched (classification system followed by classification symbols)

H04W74/-; H04W52/-; H04W72-; H04W 28/-; H04W56/-

Documentation searched other than minimum documentation to the extent that such documents are included in the fields searched

CNABS; CNTXT; CNKI; VEN; DWPI; WOTXT; EPTXT; USTXT: PDCCH, 命令, PL, 路径损耗, 路损, 波束, 同步信号块, 天线面板, 前导码, 参考信号; PDCCH order, path loss, PL, msg0, beam, SSB, synchronous signal block, TRP, preamble, RACH, PRACH, msg1, RS, reference signal

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 114642042 A (OFINNO TECHNOLOGIES, LLC.) 17 June 2022 (2022-06-17)<br>description, paragraphs 125-506 | 1-61 |
| X | US 2022132436 A1 (SHARP KK; FG INNOVATION CO., LTD.) 28 April 2022 (2022-04-28)<br>description, paragraphs 138-219 | 1-61 |
| X | CN 110380837 A (HUAWEI TECHNOLOGIES CO., LTD.) 25 October 2019 (2019-10-25)<br>description, paragraphs 54-147 | 1-61 |
| X | US 2022078828 A1 (NTT DOCOMO INC.) 10 March 2022 (2022-03-10)<br>description, paragraphs 19-281 | 1-61 |
| A | CN 113302964 A (NTT DOCOMO INC.) 24 August 2021 (2021-08-24)<br>entire document | 1-61 |
| A | US 2022210825 A1 (SAMSUNG ELECTRONICS CO., LTD.) 30 June 2022 (2022-06-30)<br>entire document | 1-61 |

☐ Further documents are listed in the continuation of Box C.　　☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 May 2024** | **09 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/080235**

| Patent document cited in search report | Publication date (day/month/year) | Patent family member(s) | Publication date (day/month/year) |
|---|---|---|---|
| CN 114642042 A | 17 June 2022 | WO 2021026325 A1 | 11 February 2021 |
| | | EP 4011132 A1 | 15 June 2022 |
| | | US 2022159579 A1 | 19 May 2022 |
| US 2022132436 A1 | 28 April 2022 | WO 2020166624 A1 | 20 August 2020 |
| | | JP 2020136760 A | 31 August 2020 |
| CN 110380837 A | 25 October 2019 | US 2020178309 A1 | 04 June 2020 |
| | | US 11265921 B2 | 01 March 2022 |
| | | EP 3651404 A1 | 13 May 2020 |
| | | EP 3651404 A4 | 28 October 2020 |
| | | EP 3651404 B1 | 28 September 2022 |
| | | BR 112020017163 A2 | 22 December 2020 |
| | | WO 2019161793 A1 | 29 August 2019 |
| | | CN 110198205 A | 03 September 2019 |
| | | CN 110380837 B | 25 December 2020 |
| | | VN 74993 A | 25 December 2020 |
| | | IN 202047037686 A | 18 September 2020 |
| US 2022078828 A1 | 10 March 2022 | EP 3911113 A1 | 17 November 2021 |
| | | WO 2020144774 A1 | 16 July 2020 |
| CN 113302964 A | 24 August 2021 | WO 2020144775 A1 | 16 July 2020 |
| US 2022210825 A1 | 30 June 2022 | EP 4248689 A1 | 27 September 2023 |
| | | WO 2022145995 A1 | 07 July 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202310369315
- CN 202310545581